(19) **Europäisches Patentamt / European Patent Office / Office européen des brevets**

(11) **EP 4 500 872 B1**

(12) # EUROPEAN PATENT SPECIFICATION

(45) Date of publication and mention
of the grant of the patent:
**29.04.2026 Bulletin 2026/18**

(21) Application number: **23707405.9**

(22) Date of filing: **01.03.2023**

(51) International Patent Classification (IPC):
*H04N 23/11* (2023.01)       *H04N 5/33* (2023.01)
*H04N 25/707* (2023.01)      *H04N 25/20* (2023.01)
*H04N 25/47* (2023.01)       *H04N 25/11* (2023.01)
*H04N 25/75* (2023.01)       *H04N 25/616* (2023.01)
*H04N 25/77* (2023.01)       *H04B 10/112* (2013.01)
*H04N 25/131* (2023.01)      *H04N 25/705* (2023.01)
*H04N 25/79* (2023.01)       *H04N 13/271* (2018.01)
*H04N 23/21* (2023.01)       *H04N 23/12* (2023.01)
*H04N 13/254* (2018.01)      *H04Q 9/00* (2006.01)

(52) Cooperative Patent Classification (CPC):
**H04N 23/21; H04N 5/33; H04N 13/254;
H04N 13/271; H04N 23/11; H04N 23/12;
H04N 25/11; H04N 25/131; H04N 25/20;
H04N 25/47; H04N 25/616; H04N 25/705;
H04N 25/707; H04N 25/75; H04N 25/77;**      (Cont.)

(86) International application number:
**PCT/EP2023/055071**

(87) International publication number:
**WO 2023/186437 (05.10.2023 Gazette 2023/40)**

(54) **SENSOR DEVICE AND METHOD FOR OPERATING A SENSOR DEVICE**

SENSORVORRICHTUNG UND VERFAHREN ZUM BETREIBEN EINER SENSORVORRICHTUNG

DISPOSITIF CAPTEUR ET PROCÉDÉ DE FONCTIONNEMENT D'UN DISPOSITIF CAPTEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.03.2022 EP 22165546**

(43) Date of publication of application:
**05.02.2025 Bulletin 2025/06**

(73) Proprietors:
• **Sony Semiconductor Solutions Corporation
Atsugi-shi, Kanagawa 243-0014 (JP)**
• **Sony Advanced Visual Sensing AG
8952 Schlieren (CH)**
Designated Contracting States:
**AL**

(72) Inventor: **BRÄNDLI, Christian Peter
70327 Stuttgart (DE)**

(74) Representative: **Müller Hoffmann & Partner
Patentanwälte mbB
St.-Martin-Straße 58
81541 München (DE)**

(56) References cited:
WO-A1-2020/246186      JP-A- 2020 162 000
JP-A- 2021 097 312      US-A1- 2021 400 218
US-A1- 2022 038 645      US-A1- 2022 201 204
US-A1- 2022 242 317      US-A1- 2023 039 270

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**H04Q 9/00;** H04N 23/56; H04N 25/79

**Description**

FIELD OF THE INVENTION

The present technology relates to a sensor device and a method for operating a sensor device, in particular, to a sensor device and a method for operating a sensor device that allow capturing a visible light video stream together with additional information provided via infrared light.

BACKGROUND

Usual digital video cameras are e.g. used as stand-alone sensor devices or integrated into other electronic devices such as mobile phones to capture video frames showing intensity values of visible light, e.g. by using red, R, green, G, and blue, B, color filters or the like. For example, such RGB videos are captured to be transmitted to other electronic devices and displayed thereon, e.g. for video conferencing, for surveillance, for monitoring of industrial or logistic processes, for computer gaming, and the like.

The frames captured in this manner show two-dimensional images being projections of the observed three-dimensional scene onto the sensitive surface of the respective sensor device. Often, it is desired to generate a three-dimensional model of the observed scene from the captured two-dimensional images. For example, in video conference applications, it might be desirable to correctly subtract a background of a participant of the video conference, to animate an avatar/animoji representing a participant of the video conference, or to correct viewpoints of the video conference participants, e.g. to resemble the impression that members look each other into the eye. All these functions can be implemented by reconstructing a three-dimensional model of at least the heads of the video conference participants.

Although generating a three-dimensional model of the observed scene from the captured two-dimensional images is possible in principle, such a three-dimensional virtualization requires most often too much computational power to be used in practice. Moreover, virtualization based on RGB image frames is typically too slow to allow a real-time conversion of the two-dimensional image stream into a three-dimensional model of the observed scene.

On the other hand, it is known to generate depth maps that indicate the distance of each part of the scene to the sensor device, e.g. by using structured light approaches, where the imaged distortion of a predetermined and known pattern projected onto the scene allows deducing the distance of the objects visible in the scene. Using such a depth map the desired three-dimensional model of the observed scene can be generated.

But also here the problem arises that calculating depth maps from frame images is time consuming, and thus not appropriate to generate real time three-dimensional virtualizations of the scene. Further, in applications like video conferencing visible light cannot be used for depth map generation via structured light approaches, since the projected light patterns would be visible in the exchanged video streams.

Thus, while approaches for depth reconstruction are in principle available, these cannot be implemented straightforwardly without deteriorating the captured RGB images.

Moreover, it would often be helpful if the imaging functionalities of the sensor device would be capable to receive additional information besides the captured RGB video stream, without deteriorating the captured RGB images. This could help in surveillance and monitoring tasks, where capturing of certain processes or objects would trigger automatic reception of additional information within the image data.

It is therefore desirable to provide a sensor device that allows capturing of image data from which an RGB video stream that is free of disturbances can be retrieved together with additional data.

Relevant prior art documents are the following:

US 2022/038645 A1 discloses a sensor device that includes both event detecting sections and pixel signal generating sections. The device further comprises a connection control section that is configured to switch connections between a plurality of pixel blocks. This allows the sensor to operate in different modes, such as a high resolution mode or a low resolution mode, thereby providing for a flexible acquisition of event data depending on the operating conditions.

WO 2020/246186 A1 discloses an image capture system comprising an event detection sensor where individual pixels or groups of pixels are provided with color filters. This allows the control unit to detect events, such as changes in luminance, within specific wavelength ranges. An embodiment is described wherein the color filter array includes red, green, blue, and infrared (IR) filters, enabling the system to detect events occurring specifically in the infrared spectrum, separate from those in the visible spectrum.

US 2022/201204 A1 describes a data processing system that utilizes both a Dynamic Vision Sensor (DVS) for event-based data acquisition and a conventional RGB camera for acquiring frame-based image data. A control unit is configured to process the data from both sensors, for example in an automotive context, to make control decisions based on information from the event data and the image data. The system described combines the outputs of two separate and distinct sensor types.

US 2007/0070060 A1 relates to an information processing system in which an information terminal, such as a mobile phone, uses its image sensor to receive optical signals from remote devices. These optical signals contain encoded information, such as an identification (ID) code, which allows the terminal to identify and interact with the remote device. The system relies on a conventional frame-based image sensor to capture and subsequently process frames to decode the information contained in the optical signal.

SUMMARY OF INVENTION

To this end, a sensor device for observing a scene is provided as defined in claim 1.

Further, a method for operating a sensor device for observing a scene is provided as defined in claim 14.

Thus, the conventional video camera pixels (second subset of pixels), also called active pixel sensor, APS, pixels, which generate pixel signals representing the intensity of the received light are supplemented with dynamic/event-based vision sensor, DVS/EVS, pixels (first subset of pixels) that are sensitive to intensity changes above a certain threshold, which are called events. While the video camera pixels generate pixel signals representing the received intensity in the visible spectrum, the EVS pixels operate on infrared light, i.e. they are sensitive to intensity changes of received infrared light. The sensor device is capable to look after and extract additional information that is encoded in the infrared light from the detected event stream.

Thus, in addition to the function to deduce the temporal sequence of two-dimensional intensity distributions of the infrared part of the electromagnetic spectrum, the sensor device is capable to filter out additional information beyond the mere two-dimensional intensity distribution by decoding messages sent by an infrared transmitter visible in the scene. It is also possible to use infrared structured light to allow reconstruction of depth maps from the detected events. Since the infrared spectrum is used to encode this additional information directed to the sensor device, the visible spectrum observed by the APS pixels is not affected by this information.

In addition, since the data rates produced by event detection are much smaller than the data rates produced for full intensity frame detection, the EVS pixels guarantee that the additional information is available fast enough to supplement the full intensity pixel signals in real time with the additional information.

BRIEF DESCRIPTION OF DRAWINGS

Fig. 1 is a schematic diagram of a sensor device.
Fig. 2 is a schematic block diagram of a sensor section.
Fig. 3 is a schematic block diagram of a pixel array section.
Fig. 4 is a schematic circuit diagram of a pixel block.
Fig. 5 is a schematic block diagram illustrating of an event detecting section.
Fig. 6 is a schematic circuit diagram of a current-voltage converting section.
Fig. 7 is a schematic circuit diagram of a subtraction section and a quantization section.
Fig. 8 is a schematic timing chart of an example operation of the sensor section.
Fig. 9 is a schematic diagram of a frame data generation method based on event data.
Fig. 10 is a schematic block diagram of another quantization section.
Fig. 11 is a schematic diagram of another event detecting section.
Fig. 12 is a schematic block diagram of another pixel array section.
Fig. 13 is a schematic circuit diagram of another pixel block.
Fig. 14 is a schematic block diagram of a scan-type sensor device.
Fig. 15 is a schematic block diagram of a sensor device.
Fig. 16 is a schematic illustration of a signal encoded in infrared light received by a sensor device.
Fig. 17 is a schematic block diagram of another sensor device.
Fig. 18 is a schematic illustration of the functioning of the sensor device of Fig. 17.
Fig. 19 is a functional block diagram of the sensor device of Fig. 17.
Fig. 20 is a schematic illustration of a viewpoint adjustment process.
Fig. 21 is a schematic illustration of the structure of a sensor device.
Fig. 22 is a schematic illustration of the structure of another sensor device.
Fig. 23 is a schematic illustration of the structure of another sensor device.
Fig. 24 is a schematic illustration of the structure of another sensor device.
Fig. 25 illustrates schematically a process flow of a method for operating a sensor device
Fig. 26 is a schematic block diagram of a smart phone.

DETAILED DESCRIPTION

The present disclosure is directed to mitigating problems occurring when information on a captured scene is to be provided to a sensor device, which information goes beyond the mere two-dimensional intensity distribution observed by the sensor device. Such information might e.g. allow real-time conversion of the two-dimensional intensity distribution to a three-dimensional model of the observed scene, or may consist of messages directed to the sensor device. The solutions to this problem discussed below are applicable to all sensor types that allow capturing a scene by generating an event data stream based on infrared light together with a full intensity frame sequence that is based on visible light.

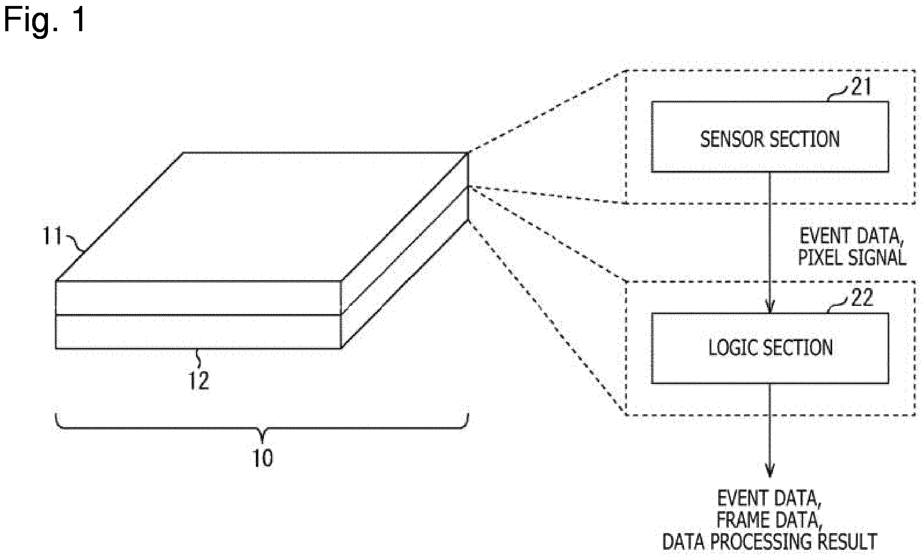

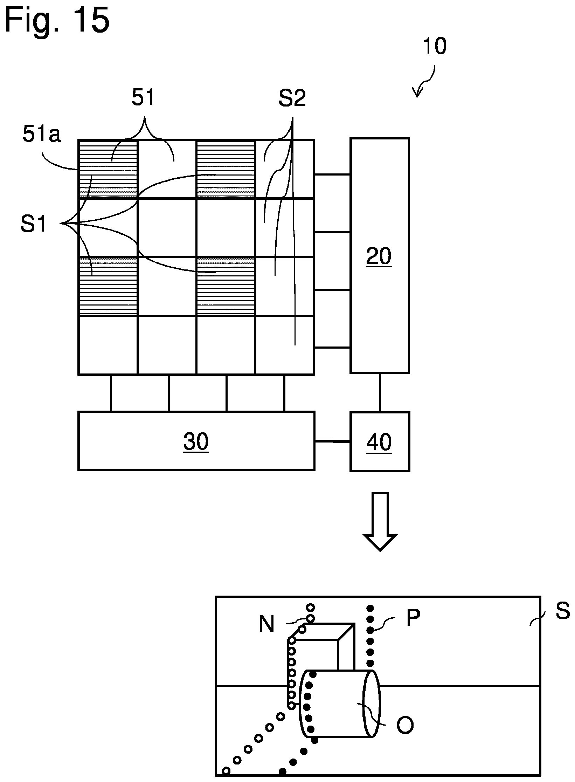

Here, to clarify its functions and also in order to cover an important application example, first a general description of an event based-vision sensor, EVS is given with respect to Figs. 1 to 14. This general description mainly focuses on the possibility to share pixels between EVS circuitry and APS circuitry such as to generate a hybrid EVS-APS device. More specific concepts directed to the solution of the above problems are then discussed starting with Fig. 15.

Of course it has to be understood that the following description is purely exemplary and that a (hybrid) EVSs could also be implemented differently.

Fig. 1 is a diagram illustrating a configuration example of a sensor device 10, which is in the example of Fig. 1 constituted by a sensor chip.

The sensor device 10 is a single-chip semiconductor chip and includes a sensor die (substrate) 11, which serves as a plurality of dies (substrates), and a logic die 12 that are stacked. Note that, the sensor device 10 can also include only a single die or three or more stacked dies.

In the sensor device 10 of Fig. 1, the sensor die 11 includes (a circuit serving as) a sensor section 21, and the logic die 12 includes a logic section 22. Note that, the sensor section 21 can be partly formed on the logic die 12. Further, the logic section 22 can be partly formed on the sensor die 11.

The sensor section 21 includes pixels configured to perform photoelectric conversion on incident light to generate electrical signals, and generates event data indicating the occurrence of events that are changes in the electrical signal of the pixels. The sensor section 21 supplies the event data to the logic section 22. That is, the sensor section 21 performs imaging by performing, in the pixels, photoelectric conversion on incident light to generate electrical signals, similarly to a synchronous image sensor, for example. The sensor section 21, however, also generates event data indicating the occurrence of events that are changes in the electrical signal of the pixels in addition to generating image data in a frame format (frame data). The sensor section 21 outputs, to the logic section 22, the event data obtained by the imaging.

Here, the synchronous image sensor is an image sensor configured to perform imaging in synchronization with a vertical synchronization signal and output frame data that is image data in a frame format. The event detection functions of the sensor section 21 can be regarded as asynchronous (an asynchronous image sensor) in contrast to the synchronous image sensor, since as far as event detection is concerned the sensor section 21 does not operate in synchronization with a vertical synchronization signal when outputting event data.

Note that, the sensor section 21 generates and outputs, other than event data, frame data, similarly to the synchronous image sensor. In addition, the sensor section 21 can output, together with event data, electrical signals of pixels in which events have occurred, as pixel signals that are pixel values of the pixels in frame data.

The logic section 22 controls the sensor section 21 as needed. Further, the logic section 22 performs various types of data processing, such as data processing of generating frame data on the basis of event data from the sensor section 21 and image processing on frame data from the sensor section 21 or frame data generated on the basis of the event data from the sensor section 21, and outputs data processing results obtained by performing the various types of data processing on the event data and the frame data.

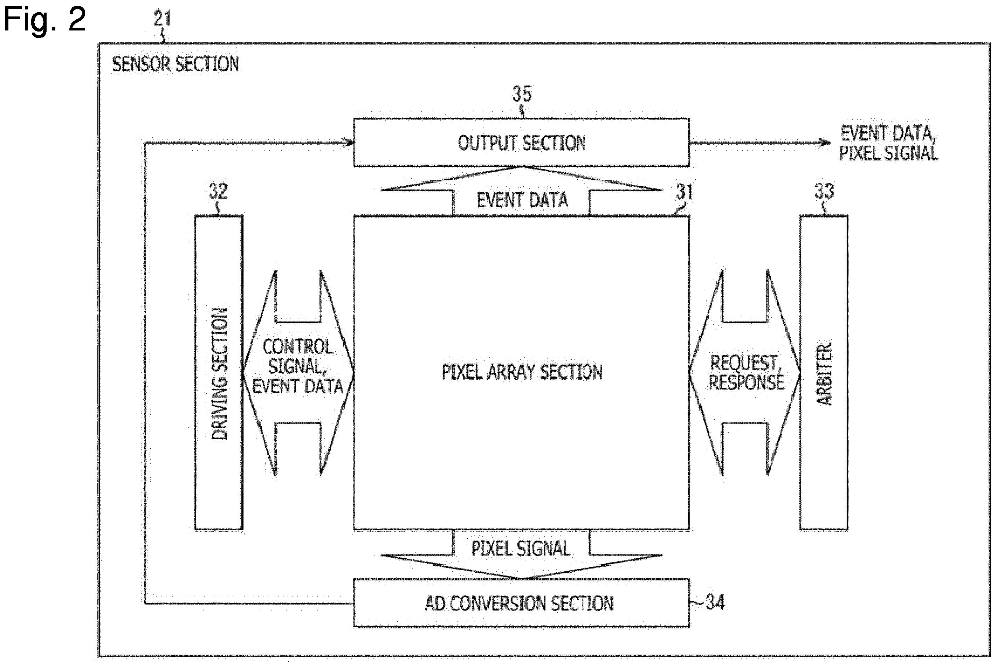

Fig. 2 is a block diagram illustrating a configuration example of the sensor section 21 of Fig. 1.

The sensor section 21 includes a pixel array section 31, a driving section 32, an arbiter 33, an AD (Analog to Digital) conversion section 34, and an output section 35.

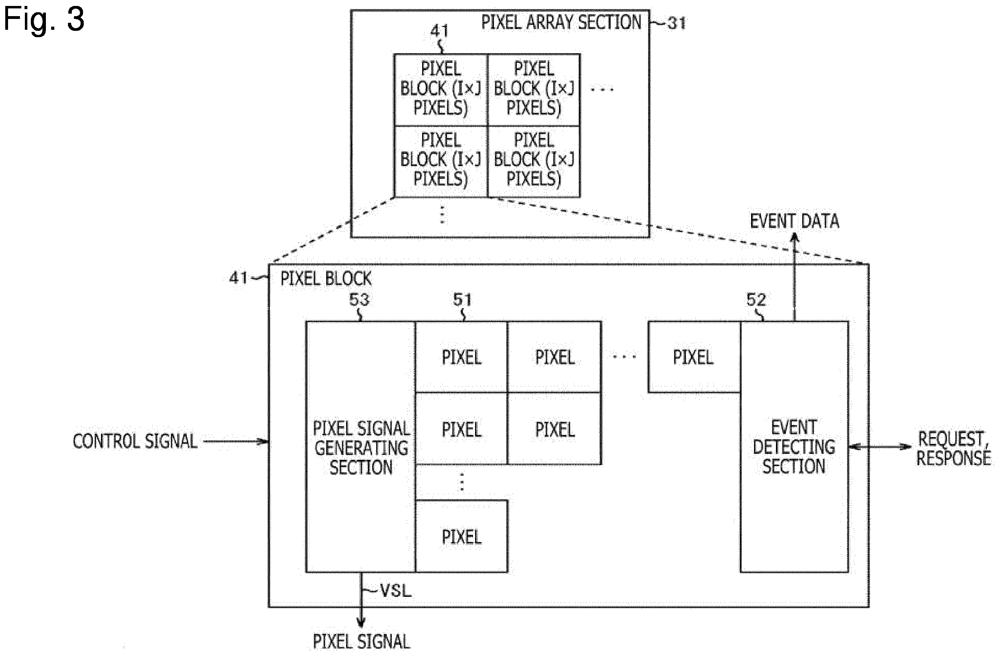

The pixel array section 31 preferably includes a plurality of pixels 51 (Fig. 3) arrayed in a two-dimensional lattice pattern. The pixel array section 31 detects, in a case where a change larger than a predetermined threshold (including a change equal to or larger than the threshold as needed) has occurred in (a voltage corresponding to) a photocurrent that is an electrical signal generated by photoelectric conversion in the pixel 51, the change in the photocurrent as an event. In a case of detecting an event, the pixel array section 31 outputs, to the arbiter 33, a request for requesting the output of event data indicating the occurrence of the event. Then, in a case of receiving a response indicating event data output permission from the arbiter 33, the pixel array section 31 outputs the event data to the driving section 32 and the output section 35. In addition, the pixel array section 31 may output an electrical signal of the pixel 51 in which the event has been detected to the AD conversion section 34, as a pixel signal.

The driving section 32 supplies control signals to the pixel array section 31 to drive the pixel array section 31. For example, the driving section 32 drives the pixel 51 regarding which the pixel array section 31 has output event data, so that the pixel 51 in question supplies (outputs) a pixel signal to the AD conversion section 34. But the driving section 32 may also drive the pixels 51 in a synchronous manner to generate frame data.

The arbiter 33 arbitrates the requests for requesting the output of event data from the pixel array section 31, and returns responses indicating event data output permission or prohibition to the pixel array section 31.

The AD conversion section 34 includes, for example, a single-slope ADC (AD converter) (not illustrated) in each column of pixel blocks 41 (Fig. 3) described later, for example. The AD conversion section 34 performs, with the ADC in each column, AD conversion on pixel signals of the pixels 51 of the pixel blocks 41 in the column, and supplies the resultant to the output section 35. Note that, the AD conversion section 34 can perform CDS (Correlated Double Sampling) together with pixel signal AD conversion.

The output section 35 performs necessary processing on the pixel signals from the AD conversion section 34 and the event data from the pixel array section 31 and supplies the resultant to the logic section 22 (Fig. 1).

Here, a change in the photocurrent generated in the pixel 51 can be recognized as a change in the amount of light entering the pixel 51, so that it can also be said that an event is a change in light amount (a change in light amount larger than the threshold) in the pixel 51.

Event data indicating the occurrence of an event at least includes location information (coordinates or the like) indicating the location of a pixel block in which a change in light amount, which is the event, has occurred. Besides, the event data can also include the polarity (positive or negative) of the change in light amount.

With regard to the series of event data that is output from the pixel array section 31 at timings at which events have occurred, it can be said that, as long as the event data interval is the same as the event occurrence interval, the event data implicitly includes time point information indicating (relative) time points at which the events have occurred. However, for example, when the event data is stored in a memory and the event data interval is no longer the same as the event occurrence interval, the time point information implicitly included in the event data is lost. Thus, the output section 35 includes, in event data, time point information indicating (relative) time points at which events have occurred, such as timestamps, before the event data interval is changed from the event occurrence interval. The processing of including time point information in event data can be performed in any block other than the output section 35 as long as the processing is performed before time point information implicitly included in event data is lost.

Fig. 3 is a block diagram illustrating a configuration example of the pixel array section 31 of Fig. 2.

The pixel array section 31 may include a plurality of pixel blocks 41. Each pixel block 41 may include the I×J pixels 51 that are one or more pixels arrayed in I rows and J columns (I and J are integers), an event detecting section 52, and a pixel signal generating section 53. The one or more pixels 51 in the pixel block 41 share the event detecting section 52 and the pixel signal generating section 53. Further, in each column of the pixel blocks 41, a VSL (Vertical Signal Line) for connecting the pixel blocks 41 to the ADC of the AD conversion section 34 is wired.

The pixel 51 receives light incident from an object and performs photoelectric conversion to generate a photocurrent serving as an electrical signal. The pixel 51 supplies the photocurrent to the event detecting section 52 under the control of the driving section 32.

The event detecting section 52 detects, as an event, a change larger than the predetermined threshold in photocurrent from each of the pixels 51, under the control of the driving section 32. In a case of detecting an event, the event detecting section 52 may supply, to the arbiter 33 (Fig. 2), a request for requesting the output of event data indicating the occurrence of the event. Then, when receiving a response indicating event data output permission to the request from the arbiter 33, the event detecting section 52 outputs the event data to the driving section 32 and the output section 35.

The pixel signal generating section 53 generates, in the case where the event detecting section 52 has detected an event, a voltage corresponding to a photocurrent from the pixel 51 as a pixel signal, and supplies the voltage to the AD conversion section 34 through the VSL, under the control of the driving section 32.

Here, detecting a change larger than the predetermined threshold in (log) photocurrent as an event can also be recognized as detecting, as an event, absence of change larger than the predetermined threshold in photocurrent. The pixel signal generating section 53 can generate a pixel signal in the case where absence of change larger than the predetermined threshold in photocurrent has been detected as an event as well as in the case where a change larger than the predetermined threshold in photocurrent has been detected as an event.

Further, the event detecting section 52 and the pixel signal generating section 53 may operate independently from each other. This means that while event data are generated by the event detecting section 52, pixel signals are generated by the pixel signal generating section 53 in a synchronous manner to generate frame data. The event detecting section 52 and the pixel signal generating section 53 may also operate in a time multiplexed manner such that each of the sections receives the photocurrent from the pixels 51 only during different time intervals.

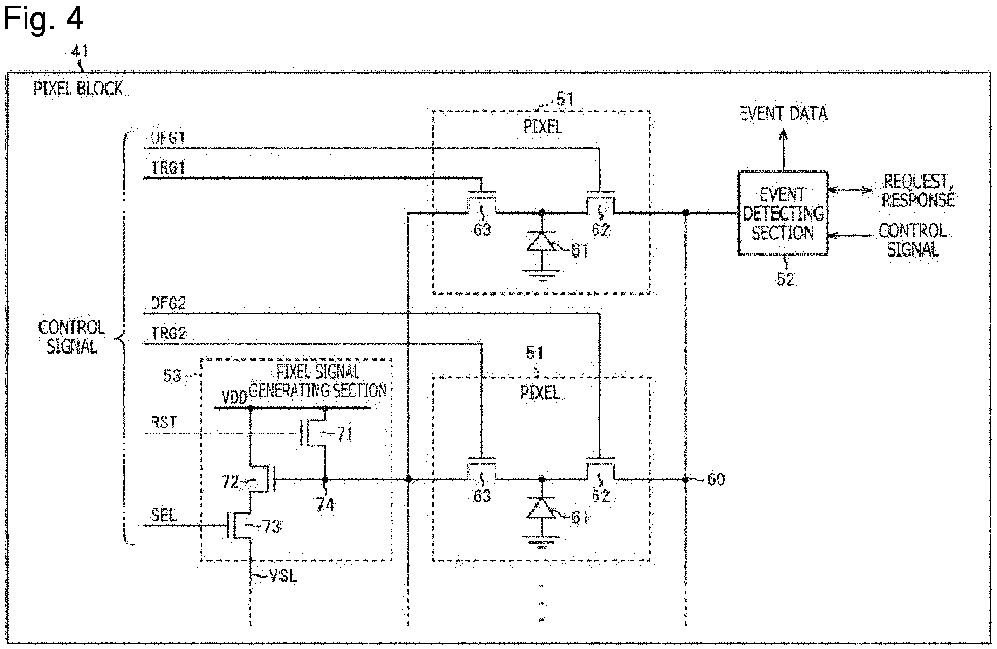

Fig. 4 is a circuit diagram illustrating a configuration example of the pixel block 41. The configuration of Fig. 4 may be referred to as "shared pixel configuration".

The pixel block 41 includes, as described with reference to Fig. 3, the pixels 51, the event detecting section 52, and the pixel signal generating section 53.

The pixel 51 includes a photoelectric conversion element 61 and transfer transistors 62 and 63.

The photoelectric conversion element 61 includes, for example, a PD (Photodiode). The photoelectric conversion element 61 receives incident light and performs photoelectric conversion to generate charges.

The transfer transistor 62 includes, for example, an N (Negative)-type MOS (Metal-Oxide-Semiconductor) FET (Field Effect Transistor). The transfer transistor 62 of the n-th pixel 51 of the I×J pixels 51 in the pixel block 41 is turned on or off in response to a control signal OFGn supplied from the driving section 32 (Fig. 2). When the transfer transistor 62 is turned on, charges generated in the photoelectric conversion element 61 are transferred (supplied) to the event detecting section 52, as a photocurrent.

The transfer transistor 63 includes, for example, an N-type MOSFET. The transfer transistor 63 of the n-th pixel 51 of the I×J pixels 51 in the pixel block 41 is turned on or off in response to a control signal TRGn supplied from the driving section 32. When the transfer transistor 63 is turned on, charges generated in the photoelectric conversion element 61 are transferred to an FD 74 of the pixel signal generating section 53.

The I×J pixels 51 in the pixel block 41 are connected to the event detecting section 52 of the pixel block 41 through nodes 60. Thus, photocurrents generated in (the photoelectric conversion elements 61 of) the pixels 51 are supplied to the event detecting section 52 through the nodes 60. As a result, the event detecting section 52 receives the sum of photocurrents from all the pixels 51 in the pixel block 41. Thus, the event detecting section 52 detects, as an event, a change in sum of photocurrents supplied from the I×J pixels 51 in the pixel block 41.

The pixel signal generating section 53 includes a reset transistor 71, an amplification transistor 72, a selection transistor 73, and the FD (Floating Diffusion) 74.

The reset transistor 71, the amplification transistor 72, and the selection transistor 73 include, for example, N-type MOSFETs.

The reset transistor 71 is turned on or off in response to a control signal RST supplied from the driving section 32 (Fig. 2). When the reset transistor 71 is turned on, the FD 74 is connected to a power supply VDD, and charges accumulated in the FD 74 are thus discharged to the power supply VDD. With this, the FD 74 is reset.

The amplification transistor 72 has a gate connected to the FD 74, a drain connected to the power supply VDD, and a source connected to the VSL through the selection transistor 73. The amplification transistor 72 is a source follower and outputs a voltage (electrical signal) corresponding to the voltage of the FD 74 supplied to the gate to the VSL through the selection transistor 73.

The selection transistor 73 is turned on or off in response to a control signal SEL supplied from the driving section 32. When the selection transistor 73 is turned on, a voltage corresponding to the voltage of the FD 74 from the amplification transistor 72 is output to the VSL.

The FD 74 accumulates charges transferred from the photoelectric conversion elements 61 of the pixels 51 through the transfer transistors 63, and converts the charges to voltages.

With regard to the pixels 51 and the pixel signal generating section 53, which are configured as described above, the driving section 32 turns on the transfer transistors 62 with control signals OFGn, so that the transfer transistors 62 supply, to the event detecting section 52, photocurrents based on charges generated in the photoelectric conversion elements 61 of the pixels 51. With this, the event detecting section 52 receives a current that is the sum of the photocurrents from all the pixels 51 in the pixel block 41, which might also be only a single pixel.

When the event detecting section 52 detects, as an event, a change in photocurrent (sum of photo currents) in the pixel block 41, the driving section 32 may turn off the transfer transistors 62 of all the pixels 51 in the pixel block 41, to thereby stop the supply of the photocurrents to the event detecting section 52. Then, the driving section 32 may sequentially turn on, with the control signals TRGn, the transfer transistors 63 of the pixels 51 in the pixel block 41 in which the event has been detected, so that the transfer transistors 63 transfers charges generated in the photoelectric conversion elements 61 to the FD 74. The FD 74 accumulates the charges transferred from (the photoelectric conversion elements 61 of) the pixels 51. Voltages corresponding to the charges accumulated in the FD 74 are output to the VSL, as pixel signals of the pixels 51, through the amplification transistor 72 and the selection transistor 73.

As described above, in the sensor section 21 (Fig. 2), in this manner only pixel signals of the pixels 51 in the pixel block 41 in which an event has been detected are sequentially output to the VSL. The pixel signals output to the VSL are supplied to the AD conversion section 34 to be subjected to AD conversion.

Here, in the pixels 51 in the pixel block 41, the transfer transistors 63 can be turned on not sequentially but simultaneously. In this case, the sum of pixel signals of all the pixels 51 in the pixel block 41 can be output.

Further, it is also possible to operate the pixel generating section 53 independently from the event detection by controlling the transfer transistors 63 without regard of the event detection or by entirely omitting the transfer transistors 63. In this case frame data can be generated by the pixel generating section 53 in the conventional, synchronous manner, while the event detection can be performed concurrently. If necessary, photocurrent transfer to the event detecting section 52 and the pixel signal generating section 53 may be time multiplexed such that only one of the two transfer transistors 62, 63 per pixel 51 is open at a given point in time.

In the pixel array section 31 of Fig. 3, the pixel block 41 includes one or more pixels 51, and the one or more pixels 51 share the event detecting section 52 and the pixel signal generating section 53. Thus, in the case where the pixel block 41 includes a plurality of pixels 51, the numbers of the event detecting sections 52 and the pixel signal generating sections 53 can be reduced as compared to a case where the event detecting section 52 and the pixel signal generating section 53 are provided for each of the pixels 51, with the result that the scale of the pixel array section 31 can be reduced.

Note that, in the case where the pixel block 41 includes a plurality of pixels 51, the event detecting section 52 can be provided for each of the pixels 51. In the case where the plurality of pixels 51 in the pixel block 41 share the event detecting section 52, events are detected in units of the pixel blocks 41. In the case where the event detecting section 52 is provided for each of the pixels 51, however, events can be detected in units of the pixels 51.

Yet, even in the case where the plurality of pixels 51 in the pixel block 41 share the single event detecting section 52, events can be detected in units of the pixels 51 when the transfer transistors 62 of the plurality of pixels 51 are temporarily turned on in a time-division manner.

Further, in a case where there is no need to output pixel signals, the pixel block 41 can be formed without the pixel signal generating section 53. In the case where the pixel block 41 is formed without the pixel signal generating section 53, the sensor section 21 can be formed without the AD conversion section 34 and the transfer transistors 63. In this case, the scale of the sensor section 21 can be reduced. The sensor will then output the address of the pixel (block) in which the event occurred, if necessary with a time stamp.

Moreover, additional pixels 51 connected to pixel signal generating sections 53, but not to event detecting sections 52 may be provided on the sensor die 11. These pixels 51 may be interleaved with the pixels 51 connected to the event detecting section 52, but may also form a separate pixel array for generating frame data. The separation of the event detection function and the pixel signal generating function may even by implemented as two pixel arrays on different dies that are arranged such as to observe the same scene. Thus basically any pixel arrangement/pixel circuitry might be used that allows obtaining event data with a first subset of pixels 51 and generating of pixel signals with a second subset of pixels 51.

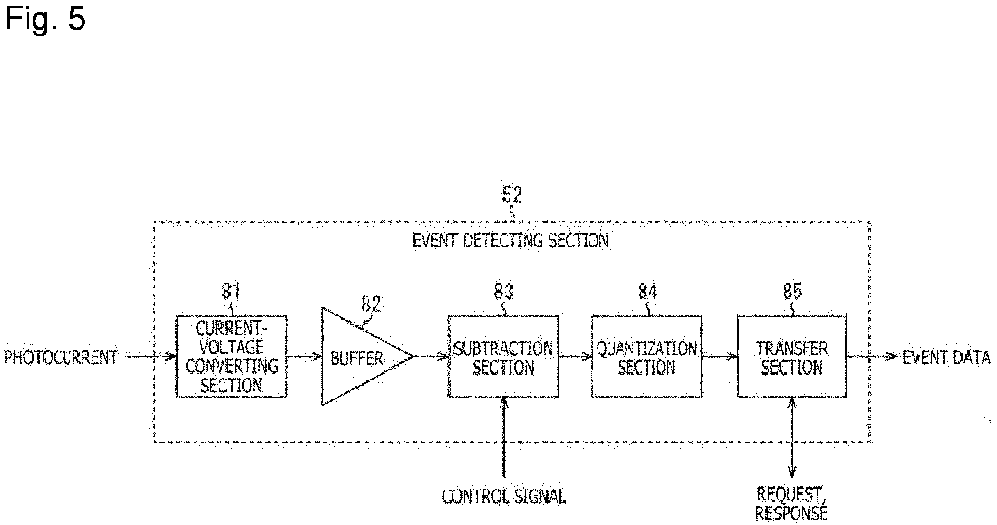

Fig. 5 is a block diagram illustrating a configuration example of the event detecting section 52 of Fig. 3.

The event detecting section 52 includes a current-voltage converting section 81, a buffer 82, a subtraction section 83, a quantization section 84, and a transfer section 85.

The current-voltage converting section 81 converts (a sum of) photocurrents from the pixels 51 to voltages corresponding to the logarithms of the photocurrents (hereinafter also referred to as a "photovoltage") and supplies the voltages to the buffer 82.

The buffer 82 buffers photovoltages from the current-voltage converting section 81 and supplies the resultant to the subtraction section 83.

The subtraction section 83 calculates, at a timing instructed by a row driving signal that is a control signal from the driving section 32, a difference between the current photovoltage and a photovoltage at a timing slightly shifted from the current time, and supplies a difference signal corresponding to the difference to the quantization section 84.

The quantization section 84 quantizes difference signals from the subtraction section 83 to digital signals and supplies the quantized values of the difference signals to the transfer section 85 as event data.

The transfer section 85 transfers (outputs), on the basis of event data from the quantization section 84, the event data to the output section 35. That is, the transfer section 85 supplies a request for requesting the output of the event data to the arbiter 33. Then, when receiving a response indicating event data output permission to the request from the arbiter 33, the transfer section 85 outputs the event data to the output section 35.

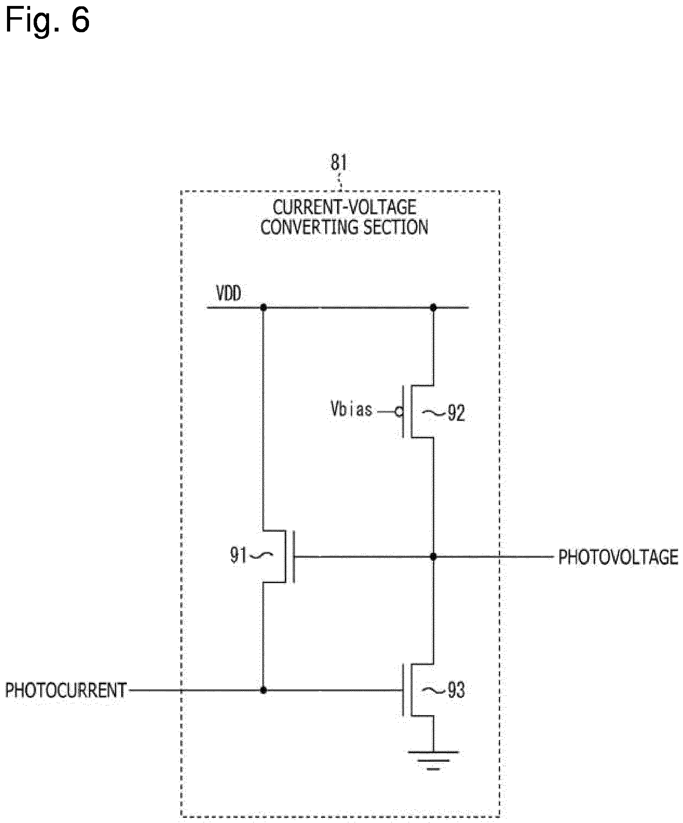

Fig. 6 is a circuit diagram illustrating a configuration example of the current-voltage converting section 81 of Fig. 5.

The current-voltage converting section 81 includes transistors 91 to 93. As the transistors 91 and 93, for example, N-type MOSFETs can be employed. As the transistor 92, for example, a P-type MOSFET can be employed.

The transistor 91 has a source connected to the gate of the transistor 93, and a photocurrent is supplied from the pixel 51 to the connecting point between the source of the transistor 91 and the gate of the transistor 93. The transistor 91 has a drain connected to the power supply VDD and a gate connected to the drain of the transistor 93.

The transistor 92 has a source connected to the power supply VDD and a drain connected to the connecting point between the gate of the transistor 91 and the drain of the transistor 93. A predetermined bias voltage Vbias is applied to the gate of the transistor 92. With the bias voltage Vbias, the transistor 92 is turned on or off, and the operation of the current-voltage converting section 81 is turned on or off depending on whether the transistor 92 is turned on or off.

The source of the transistor 93 is grounded.

In the current-voltage converting section 81, the transistor 91 has the drain connected on the power supply VDD side. The source of the transistor 91 is connected to the pixels 51 (Fig. 4), so that photocurrents based on charges generated in the photoelectric conversion elements 61 of the pixels 51 flow through the transistor 91 (from the drain to the source). The transistor 91 operates in a subthreshold region, and at the gate of the transistor 91, photovoltages corresponding to the logarithms of the photocurrents flowing through the transistor 91 are generated. As described above, in the current-voltage converting section 81, the transistor 91 converts photocurrents from the pixels 51 to photovoltages corresponding to the logarithms of the photocurrents.

In the current-voltage converting section 81, the transistor 91 has the gate connected to the connecting point between the drain of the transistor 92 and the drain of the transistor 93, and the photovoltages are output from the connecting point in question.

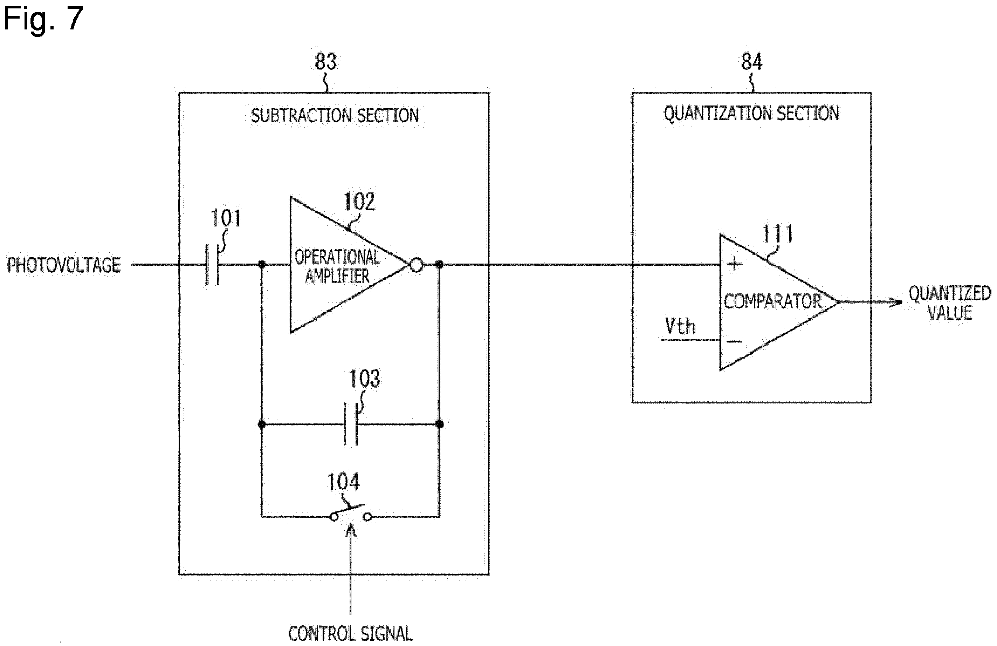

Fig. 7 is a circuit diagram illustrating configuration examples of the subtraction section 83 and the quantization section 84 of Fig. 5.

The subtraction section 83 includes a capacitor 101, an operational amplifier 102, a capacitor 103, and a switch 104. The quantization section 84 includes a comparator 111.

The capacitor 101 has one end connected to the output terminal of the buffer 82 (Fig. 5) and the other end connected to the input terminal (inverting input terminal) of the operational amplifier 102. Thus, photovoltages are input to the input terminal of the operational amplifier 102 through the capacitor 101.

The operational amplifier 102 has an output terminal connected to the non-inverting input terminal (+) of the comparator 111.

The capacitor 103 has one end connected to the input terminal of the operational amplifier 102 and the other end connected to the output terminal of the operational amplifier 102.

The switch 104 is connected to the capacitor 103 to switch the connections between the ends of the capacitor 103. The switch 104 is turned on or off in response to a row driving signal that is a control signal from the driving section 32, to thereby switch the connections between the ends of the capacitor 103.

A photovoltage on the buffer 82 (Fig. 5) side of the capacitor 101 when the switch 104 is on is denoted by Vinit, and the capacitance (electrostatic capacitance) of the capacitor 101 is denoted by C1. The input terminal of the operational amplifier 102 serves as a virtual ground terminal, and a charge Qinit that is accumulated in the capacitor 101 in the case where the switch 104 is on is expressed by Expression (1).

$$Qinit = C1 \times Vinit \qquad (1)$$

Further, in the case where the switch 104 is on, the connection between the ends of the capacitor 103 is cut (shortcircuited), so that no charge is accumulated in the capacitor 103.

When a photovoltage on the buffer 82 (Fig. 5) side of the capacitor 101 in the case where the switch 104 has thereafter been turned off is denoted by Vafter, a charge Qafter that is accumulated in the capacitor 101 in the case where the switch 104 is off is expressed by Expression (2).

$$Qafter = C1 \times Vafter \qquad (2)$$

When the capacitance of the capacitor 103 is denoted by C2 and the output voltage of the operational amplifier 102 is denoted by Vout, a charge Q2 that is accumulated in the capacitor 103 is expressed by Expression (3).

$$Q2 = -C2 \times Vout \qquad (3)$$

Since the total amount of charges in the capacitors 101 and 103 does not change before and after the switch 104 is turned off, Expression (4) is established.

$$Qinit = Qafter + Q2 \qquad (4)$$

When Expression (1) to Expression (3) are substituted for Expression (4), Expression (5) is obtained.

$$Vout = -(C1/C2) \times (Vafter - Vinit) \qquad (5)$$

With Expression (5), the subtraction section 83 subtracts the photovoltage Vinit from the photovoltage Vafter, that is, calculates the difference signal (Vout) corresponding to a difference Vafter - Vinit between the photovoltages Vafter and Vinit. With Expression (5), the subtraction gain of the subtraction section 83 is C1/C2. Since the maximum gain is normally desired, C1 is preferably set to a large value and C2 is preferably set to a small value. Meanwhile, when C2 is too small, kTC noise increases, resulting in a risk of deteriorated noise characteristics. Thus, the capacitance C2 can only be reduced in a range that achieves acceptable noise. Further, since the pixel blocks 41 each have installed therein the event detecting section 52 including the subtraction section 83, the capacitances C1 and C2 have space constraints. In consideration of these matters, the values of the capacitances C1 and C2 are determined.

The comparator 111 compares a difference signal from the subtraction section 83 with a predetermined threshold (voltage) Vth (>0) applied to the inverting input terminal (-), thereby quantizing the difference signal. The comparator 111 outputs the quantized value obtained by the quantization to the transfer section 85 as event data.

For example, in a case where a difference signal is larger than the threshold Vth, the comparator 111 outputs an H (High) level indicating 1, as event data indicating the occurrence of an event. In a case where a difference signal is not larger than the threshold Vth, the comparator 111 outputs an L (Low) level indicating 0, as event data indicating that no event has occurred.

The transfer section 85 supplies a request to the arbiter 33 in a case where it is confirmed on the basis of event data from the quantization section 84 that a change in light amount that is an event has occurred, that is, in the case where the difference signal (Vout) is larger than the threshold Vth. When receiving a response indicating event data output permission, the transfer section 85 outputs the event data indicating the occurrence of the event (for example, H level) to the output section 35.

The output section 35 includes, in event data from the transfer section 85, location/address information regarding (the pixel block 41 including) the pixel 51 in which an event indicated by the event data has occurred and time point information indicating a time point at which the event has occurred, and further, as needed, the polarity of a change in light amount that is the event, i.e. whether the intensity did increase or decrease. The output section 35 outputs the event data.

As the data format of event data including location information regarding the pixel 51 in which an event has occurred, time point information indicating a time point at which the event has occurred, and the polarity of a change in light amount that is the event, for example, the data format called "AER (Address Event Representation)" can be employed.

Note that, a gain A of the entire event detecting section 52 is expressed by the following expression where the gain of the current-voltage converting section 81 is denoted by $CG_{log}$ and the gain of the buffer 82 is 1.

$$A = CG_{log}C1/C2 \, (\Sigma i_{photo\_}n) \quad (6)$$

Here, $i_{photo\_}n$ denotes a photocurrent of the n-th pixel 51 of the I×J pixels 51 in the pixel block 41. In Expression (6), Σ denotes the summation of n that takes integers ranging from 1 to I×J.

Note that, the pixel 51 can receive any light as incident light with an optical filter through which predetermined light passes, such as a color filter. For example, in a case where the pixel 51 receives visible light as incident light, event data indicates the occurrence of changes in pixel value in images including visible objects. Further, for example, in a case where the pixel 51 receives, as incident light, infrared light, millimeter waves, or the like for ranging, event data indicates the occurrence of changes in distances to objects. In addition, for example, in a case where the pixel 51 receives infrared light for temperature measurement, as incident light, event data indicates the occurrence of changes in temperature of objects.

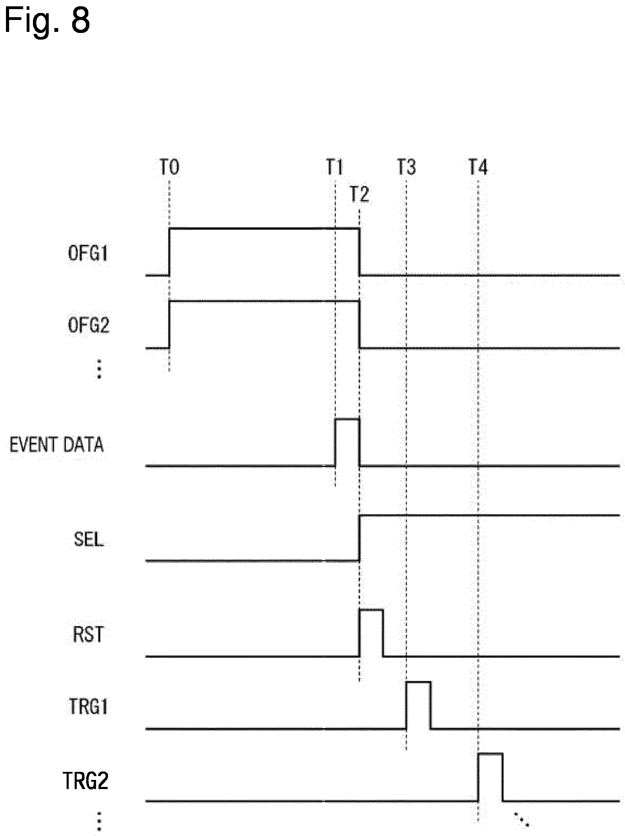

Fig. 8 is a timing chart illustrating an example of the operation of the sensor section 21 of Fig. 2.

At Timing T0, the driving section 32 changes all the control signals OFGn from the L level to the H level, thereby turning on the transfer transistors 62 of all the pixels 51 in the pixel block 41. With this, the sum of photocurrents from all the pixels 51 in the pixel block 41 is supplied to the event detecting section 52. Here, the control signals TRGn are all at the L level, and hence the transfer transistors 63 of all the pixels 51 are off.

For example, at Timing T1, when detecting an event, the event detecting section 52 outputs event data at the H level in response to the detection of the event.

At Timing T2, the driving section 32 sets all the control signals OFGn to the L level on the basis of the event data at the H level, to stop the supply of the photocurrents from the pixels 51 to the event detecting section 52. Further, the driving section 32 sets the control signal SEL to the H level, and sets the control signal RST to the H level over a certain period of time, to control the FD 74 to discharge the charges to the power supply VDD, thereby resetting the FD 74. The pixel signal generating section 53 outputs, as a reset level, a pixel signal corresponding to the voltage of the FD 74 when the FD 74 has been reset, and the AD conversion section 34 performs AD conversion on the reset level.

At Timing T3 after the reset level AD conversion, the driving section 32 sets a control signal TRG1 to the H level over a certain period to control the first pixel 51 in the pixel block 41 in which the event has been detected (or which is triggered for other reasons, as e.g. time multiplexed output and/or synchronous readout of frame data) to transfer, to the FD 74, charges generated by photoelectric conversion in (the photoelectric conversion element 61 of) the first pixel 51. The pixel signal generating section 53 outputs, as a signal level, a pixel signal corresponding to the voltage of the FD 74 to which the charges have been transferred from the pixel 51, and the AD conversion section 34 performs AD conversion on the signal level.

The AD conversion section 34 outputs, to the output section 35, a difference between the signal level and the reset level obtained after the AD conversion, as a pixel signal serving as a pixel value of the image (frame data).

Here, the processing of obtaining a difference between a signal level and a reset level as a pixel signal serving as a pixel value of an image is called "CDS." CDS can be performed after the AD conversion of a signal level and a reset level, or can be simultaneously performed with the AD conversion of a signal level and a reset level in a case where the AD conversion section 34 performs single-slope AD conversion. In the latter case, AD conversion is performed on the signal level by using the AD conversion result of the reset level as an initial value.

At Timing T4 after the AD conversion of the pixel signal of the first pixel 51 in the pixel block 41, the driving section 32 sets a control signal TRG2 to the H level over a certain period of time to control the second pixel 51 in the pixel block 41 in which the event has been detected to output a pixel signal.

In the sensor section 21, similar processing is executed thereafter, so that pixel signals of the pixels 51 in the pixel block 41 in which the event has been detected are sequentially output.

When the pixel signals of all the pixels 51 in the pixel block 41 are output, the driving section 32 sets all the control signals OFGn to the H level to turn on the transfer transistors 62 of all the pixels 51 in the pixel block 41.

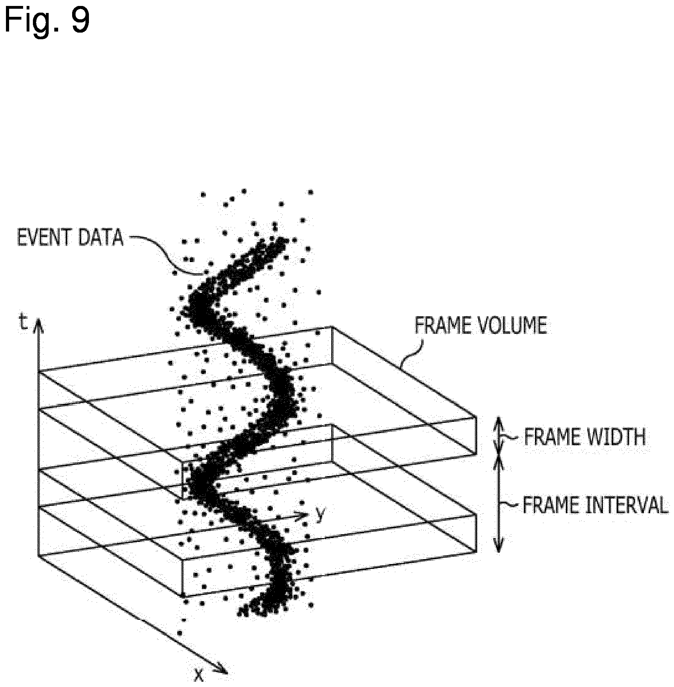

Fig. 9 is a diagram illustrating an example of a frame data generation method based on event data.

The logic section 22 sets a frame interval and a frame width on the basis of an externally input command, for example. Here, the frame interval represents the interval of frames of frame data that is generated on the basis of event data. The frame width represents the time width of event data that is used for generating frame data on a single frame. A frame interval and a frame width that are set by the logic section 22 are also referred to as a "set frame interval" and a "set frame width," respectively.

The logic section 22 generates, on the basis of the set frame interval, the set frame width, and event data from the sensor section 21, frame data that is image data in a frame format, to thereby convert the event data to the frame data.

That is, the logic section 22 generates, in each set frame interval, frame data on the basis of event data in the set frame width from the beginning of the set frame interval.

Here, it is assumed that event data includes time point information $t_i$ indicating a time point at which an event has occurred (hereinafter also referred to as an "event time point") and coordinates (x, y) serving as location information regarding (the pixel block 41 including) the pixel 51 in which the event has occurred (hereinafter also referred to as an "event location").

In Fig. 9, in a three-dimensional space (time and space) with the x axis, the y axis, and the time axis t, points representing event data are plotted on the basis of the event time point t and the event location (coordinates) (x, y) included in the event data.

That is, when a location (x, y, t) on the three-dimensional space indicated by the event time point t and the event location (x, y) included in event data is regarded as the space-time location of an event, in Fig. 9, the points representing the event data are plotted on the space-time locations (x, y, t) of the events.

The logic section 22 starts to generate frame data on the basis of event data by using, as a generation start time point at which frame data generation starts, a predetermined time point, for example, a time point at which frame data generation is externally instructed or a time point at which the sensor device 10 is powered on.

Here, cuboids each having the set frame width in the direction of the time axis t in the set frame intervals, which appear from the generation start time point, are referred to as a "frame volume." The size of the frame volume in the x-axis direction or the y-axis direction is equal to the number of the pixel blocks 41 or the pixels 51 in the x-axis direction or the y-axis direction, for example.

The logic section 22 generates, in each set frame interval, frame data on a single frame on the basis of event data in the frame volume having the set frame width from the beginning of the set frame interval.

Frame data can be generated by, for example, setting white to a pixel (pixel value) in a frame at the event location (x, y) included in event data and setting a predetermined color such as gray to pixels at other locations in the frame.

Besides, in a case where event data includes the polarity of a change in light amount that is an event, frame data can be generated in consideration of the polarity included in the event data. For example, white can be set to pixels in the case a positive polarity, while black can be set to pixels in the case of a negative polarity.

In addition, in the case where pixel signals of the pixels 51 are also output when event data is output as described with reference to Fig. 3 and Fig. 4, frame data can be generated on the basis of the event data by using the pixel signals of the pixels 51. That is, frame data can be generated by setting, in a frame, a pixel at the event location (x, y) (in a block corresponding to the pixel block 41) included in event data to a pixel signal of the pixel 51 at the location (x, y) and setting a predetermined color such as gray to pixels at other locations.

Note that, in the frame volume, there are a plurality of pieces of event data that are different in the event time point t but the same in the event location (x, y) in some cases. In this case, for example, event data at the latest or oldest event time point t can be prioritized. Further, in the case where event data includes polarities, the polarities of a plurality of pieces of event data that are different in the event time point t but the same in the event location (x, y) can be added together, and a pixel value based on the added value obtained by the addition can be set to a pixel at the event location (x, y).

Here, in a case where the frame width and the frame interval are the same, the frame volumes are adjacent to each other without any gap. Further, in a case where the frame interval is larger than the frame width, the frame volumes are arranged with gaps. In a case where the frame width is larger than the frame interval, the frame volumes are arranged to be partly overlapped with each other.

As explained above, the pixel signal generating section 53 may also generate frame data in the conventional, synchronous manner.

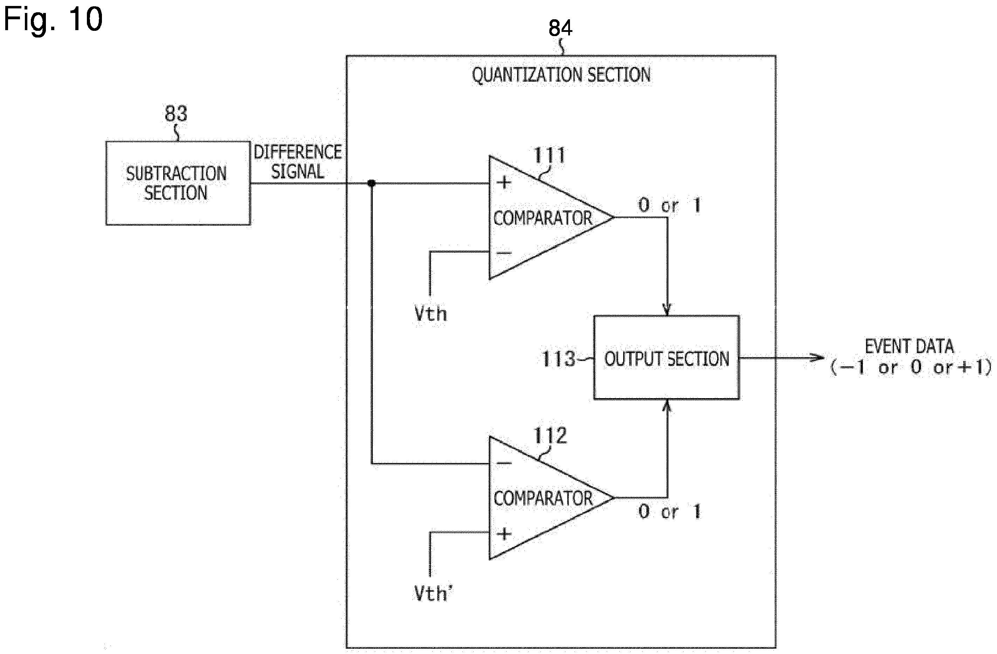

Fig. 10 is a block diagram illustrating another configuration example of the quantization section 84 of Fig. 5.

Note that, in Fig. 10, parts corresponding to those in the case of Fig. 7 are denoted by the same reference signs, and the description thereof is omitted as appropriate below.

In Fig. 10, the quantization section 84 includes comparators 111 and 112 and an output section 113.

Thus, the quantization section 84 of Fig. 10 is similar to the case of Fig. 7 in including the comparator 111. However, the quantization section 84 of Fig. 10 is different from the case of Fig. 7 in newly including the comparator 112 and the output section 113.

The event detecting section 52 (Fig. 5) including the quantization section 84 of Fig. 10 detects, in addition to events, the polarities of changes in light amount that are events.

In the quantization section 84 of Fig. 10, the comparator 111 outputs, in the case where a difference signal is larger than the threshold Vth, the H level indicating 1, as event data indicating the occurrence of an event having the positive polarity. The comparator 111 outputs, in the case where a difference signal is not larger than the threshold Vth, the L level indicating 0, as event data indicating that no event having the positive polarity has occurred.

Further, in the quantization section 84 of Fig. 10, a threshold Vth' (<Vth) is supplied to the non-inverting input terminal (+) of the comparator 112, and difference signals are supplied to the inverting input terminal (-) of the comparator 112 from the subtraction section 83. Here, for the sake of simple description, it is assumed that the threshold Vth' is equal to -Vth, for example, which needs however not to be the case.

The comparator 112 compares a difference signal from the subtraction section 83 with the threshold Vth' applied to the inverting input terminal (-), thereby quantizing the difference signal. The comparator 112 outputs, as event data, the quantized value obtained by the quantization.

For example, in a case where a difference signal is smaller than the threshold Vth' (the absolute value of the difference signal having a negative value is larger than the threshold Vth), the comparator 112 outputs the H level indicating 1, as event data indicating the occurrence of an event having the negative polarity. Further, in a case where a difference signal is not smaller than the threshold Vth' (the absolute value of the difference signal having a negative value is not larger than the threshold Vth), the comparator 112 outputs the L level indicating 0, as event data indicating that no event having the negative polarity has occurred.

The output section 113 outputs, on the basis of event data output from the comparators 111 and 112, event data indicating the occurrence of an event having the positive polarity, event data indicating the occurrence of an event having the negative polarity, or event data indicating that no event has occurred to the transfer section 85.

For example, the output section 113 outputs, in a case where event data from the comparator 111 is the H level indicating 1, +V volts indicating +1, as event data indicating the occurrence of an event having the positive polarity, to the transfer section 85. Further, the output section 113 outputs, in a case where event data from the comparator 112 is the H level indicating 1, -V volts indicating -1, as event data indicating the occurrence of an event having the negative polarity, to the transfer section 85. In addition, the output section 113 outputs, in a case where each event data from the comparators 111 and 112 is the L level indicating 0, 0 volts (GND level) indicating 0, as event data indicating that no event has occurred, to the transfer section 85.

The transfer section 85 supplies a request to the arbiter 33 in the case where it is confirmed on the basis of event data from the output section 113 of the quantization section 84 that a change in light amount that is an event having the positive polarity or the negative polarity has occurred. After receiving a response indicating event data output permission, the transfer section 85 outputs event data indicating the occurrence of the event having the positive polarity or the negative polarity (+V volts indicating 1 or -V volts indicating -1) to the output section 35.

Preferably, the quantization section 84 has a configuration as illustrated in Fig. 10.

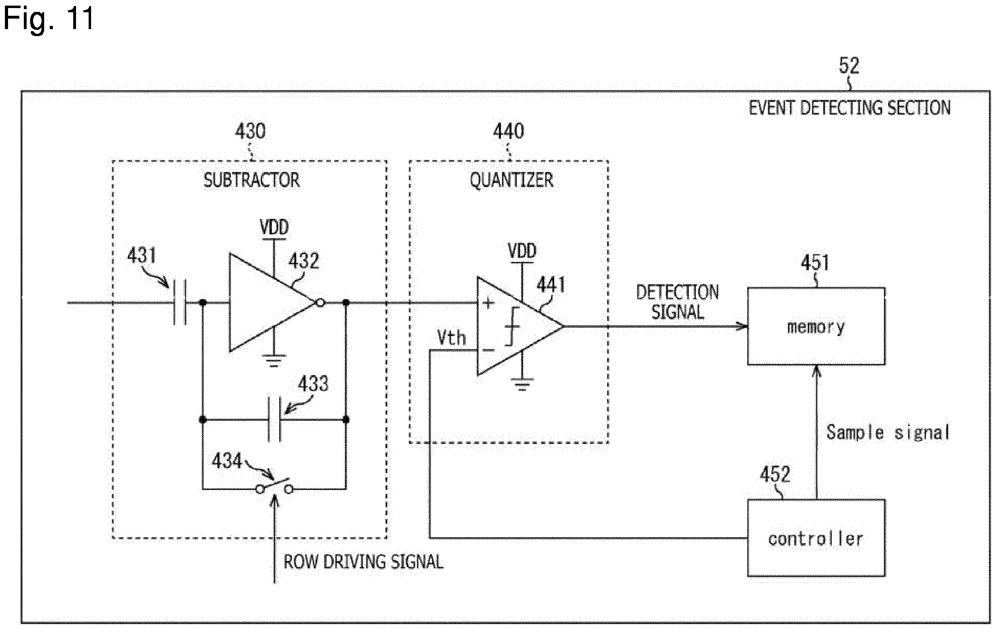

Fig. 11 is a diagram illustrating another configuration example of the event detecting section 52.

In Fig. 11, the event detecting section 52 includes a subtractor 430, a quantizer 440, a memory 451, and a controller 452. The subtractor 430 and the quantizer 440 correspond to the subtraction section 83 and the quantization section 84, respectively.

Note that, in Fig. 11, the event detecting section 52 further includes blocks corresponding to the current-voltage converting section 81 and the buffer 82, but the illustrations of the blocks are omitted in Fig. 11.

The subtractor 430 includes a capacitor 431, an operational amplifier 432, a capacitor 433, and a switch 434. The capacitor 431, the operational amplifier 432, the capacitor 433, and the switch 434 correspond to the capacitor 101, the operational amplifier 102, the capacitor 103, and the switch 104, respectively.

The quantizer 440 includes a comparator 441. The comparator 441 corresponds to the comparator 111.

The comparator 441 compares a voltage signal (difference signal) from the subtractor 430 with the predetermined threshold voltage Vth applied to the inverting input terminal (-). The comparator 441 outputs a signal indicating the comparison result, as a detection signal (quantized value).

The voltage signal from the subtractor 430 may be input to the input terminal (-) of the comparator 441, and the predetermined threshold voltage Vth may be input to the input terminal (+) of the comparator 441.

The controller 452 supplies the predetermined threshold voltage Vth applied to the inverting input terminal (-) of the comparator 441. The threshold voltage Vth which is supplied may be changed in a time-division manner. For example, the controller 452 supplies a threshold voltage Vth1 corresponding to ON events (for example, positive changes in photocurrent) and a threshold voltage Vth2 corresponding to OFF events (for example, negative changes in photocurrent) at different timings to allow the single comparator to detect a plurality of types of address events (events).

The memory 451 accumulates output from the comparator 441 on the basis of Sample signals supplied from the controller 452. The memory 451 may be a sampling circuit, such as a switch, plastic, or capacitor, or a digital memory circuit, such as a latch or flip-flop. For example, the memory 451 may hold, in a period in which the threshold voltage Vth2 corresponding to OFF events is supplied to the inverting input terminal (-) of the comparator 441, the result of comparison by the comparator 441 using the threshold voltage Vth1 corresponding to ON events. Note that, the memory 451 may be omitted, may be provided inside the pixel (pixel block 41), or may be provided outside the pixel.

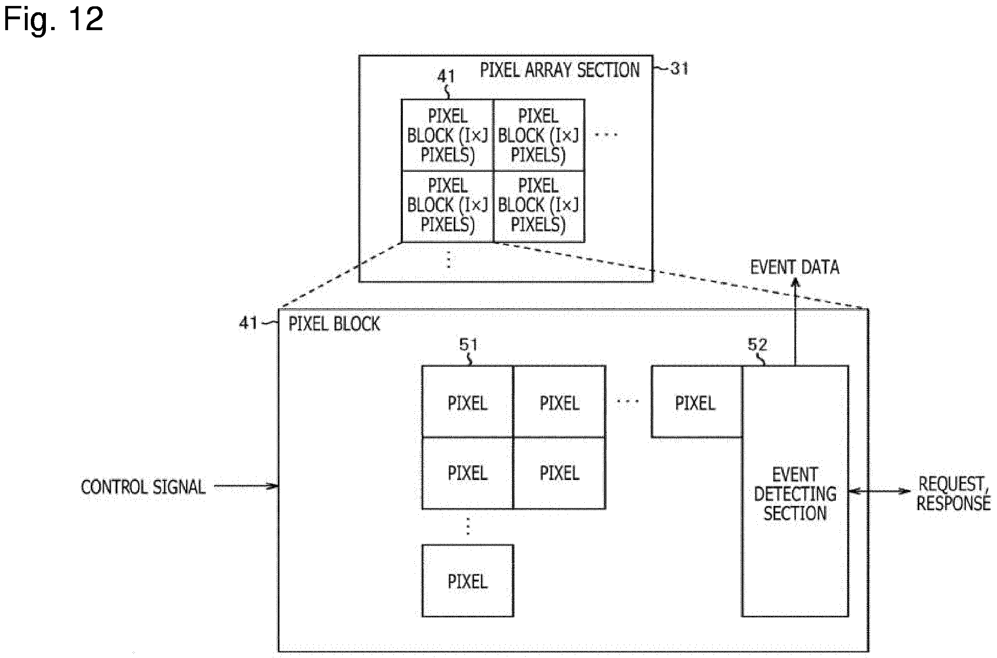

Fig. 12 is a block diagram illustrating another configuration example of the pixel array section 31 of Fig. 2.

Note that, in Fig. 12, parts corresponding to those in the case of Fig. 3 are denoted by the same reference signs, and the description thereof is omitted as appropriate below.

In Fig. 12, the pixel array section 31 includes the plurality of pixel blocks 41. The pixel block 41 includes the I×J pixels 51 that are one or more pixels and the event detecting section 52.

Thus, the pixel array section 31 of Fig. 12 is similar to the case of Fig. 3 in that the pixel array section 31 includes the plurality of pixel blocks 41 and that the pixel block 41 includes one or more pixels 51 and the event detecting section 52. However, the pixel array section 31 of Fig. 12 is different from the case of Fig. 3 in that the pixel block 41 does not include the pixel signal generating section 53.

As described above, in the pixel array section 31 of Fig. 12, the pixel block 41 does not include the pixel signal generating section 53, so that the sensor section 21 (Fig. 2) can be formed without the AD conversion section 34. As further described above, the pixel signal generating section 53 and pixels 51 feeding into it may be placed on a different part of the die 11 or even on another die or sensor chip.

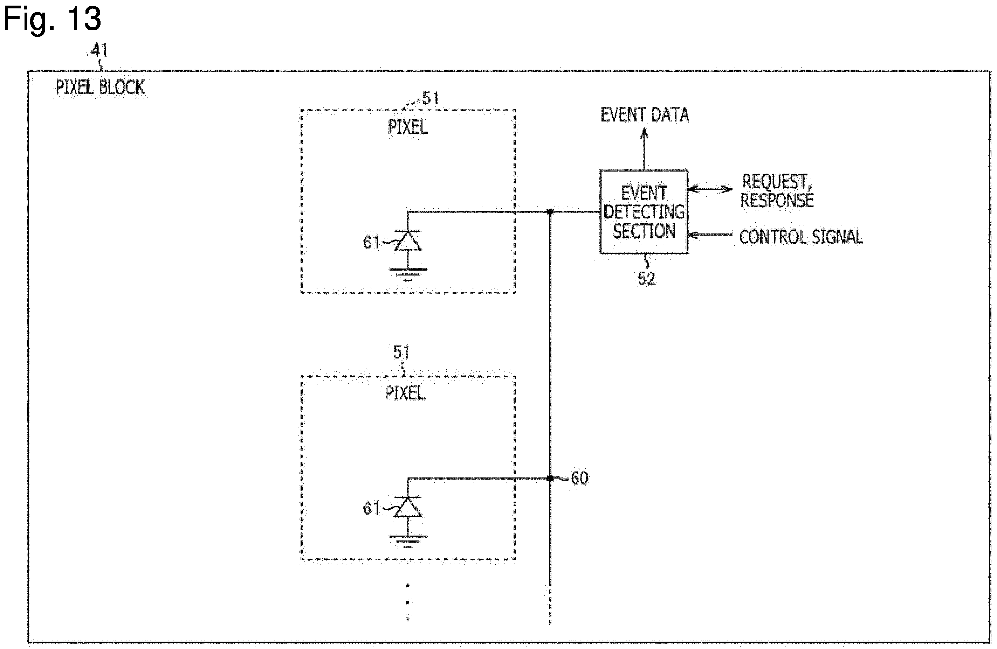

Fig. 13 is a circuit diagram illustrating a configuration example of the pixel block 41 of Fig. 12.

As described with reference to Fig. 12, the pixel block 41 includes the pixels 51 and the event detecting section 52, but does not include the pixel signal generating section 53.

In this case, the pixel 51 can only include the photoelectric conversion element 61 without the transfer transistors 62 and 63.

Note that, in the case where the pixel 51 has the configuration illustrated in Fig. 13, the event detecting section 52 can output a voltage corresponding to a photocurrent from the pixel 51, as a pixel signal.

Above, the sensor device 10 was described to be an asynchronous imaging device configured to read out events by the asynchronous readout system. However, the event readout system is not limited to the asynchronous readout system and may be the synchronous readout system. An imaging device to which the synchronous readout system is applied is a scan type imaging device that is the same as a general imaging device configured to perform imaging at a predetermined frame rate. Further, the event data detection may be performed asynchronously, while the pixel signal generation may be performed synchronously.

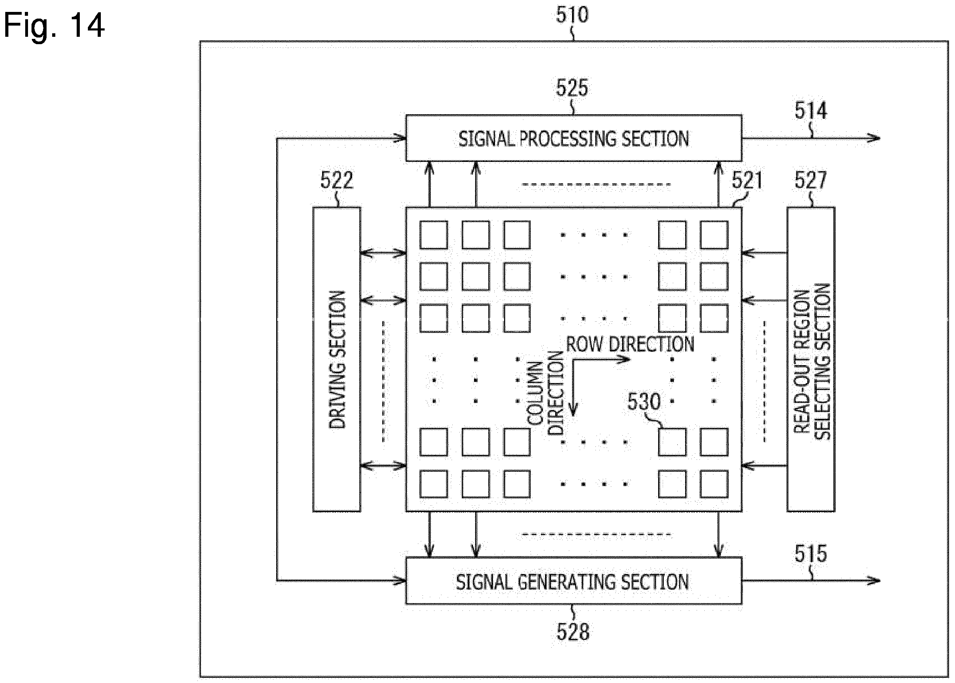

Fig. 14 is a block diagram illustrating a configuration example of a scan type imaging device.

As illustrated in Fig. 14, an imaging device 510 includes a pixel array section 521, a driving section 522, a signal processing section 525, a read-out region selecting section 527, and a signal generating section 528.

The pixel array section 521 includes a plurality of pixels 530. The plurality of pixels 530 each output an output signal in response to a selection signal from the read-out region selecting section 527. The plurality of pixels 530 can each include an in-pixel quantizer as illustrated in Fig. 11, for example. The plurality of pixels 530 output output signals corresponding to the amounts of change in light intensity. The plurality of pixels 530 may be two-dimensionally disposed in a matrix as illustrated in Fig. 14.

The driving section 522 drives the plurality of pixels 530, so that the pixels 530 output pixel signals generated in the pixels 530 to the signal processing section 525 through an output line 514. Note that, the driving section 522 and the signal processing section 525 are circuit sections for acquiring grayscale information. Thus, in a case where only event information (event data) is acquired, the driving section 522 and the signal processing section 525 may be omitted. On the other hand, when event detection is not required, all sections not necessary for acquisition of grayscale information may be omitted.

The read-out region selecting section 527 selects some of the plurality of pixels 530 included in the pixel array section 521. For example, the read-out region selecting section 527 selects one or a plurality of rows included in the two-dimensional matrix structure corresponding to the pixel array section 521. The read-out region selecting section 527 sequentially selects one or a plurality of rows on the basis of a cycle set in advance. Further, the read-out region selecting section 527 may determine a selection region on the basis of requests from the pixels 530 in the pixel array section 521.

The signal generating section 528 generates, on the basis of output signals of the pixels 530 selected by the read-out region selecting section 527, event signals corresponding to active pixels in which events have been detected of the selected pixels 530. The events mean an event that the intensity of light changes. The active pixels mean the pixel 530 in which the amount of change in light intensity corresponding to an output signal exceeds or falls below a threshold set in advance. For example, the signal generating section 528 compares output signals from the pixels 530 with a reference signal, and detects, as an active pixel, a pixel that outputs an output signal larger or smaller than the reference signal. The signal generating section 528 generates an event signal (event data) corresponding to the active pixel.

The signal generating section 528 can include, for example, a column selecting circuit configured to arbitrate signals input to the signal generating section 528. Further, the signal generating section 528 can output not only information regarding active pixels in which events have been detected, but also information regarding non-active pixels in which no event has been detected, i.e. it can operate as a conventional synchronous image sensor that generates a series of consecutive image frames.

The signal generating section 528 outputs, through an output line 515, address information and timestamp information (for example, (X, Y, T)) regarding the active pixels in which the events have been detected. However, the data that is output from the signal generating section 528 may not only be the address information and the timestamp information, but also information in a frame format (for example, (0, 0, 1, 0, ···)).

In the above description a sensor device 10 has been described in which event data generation and pixel signal generation may depend on each other or may be independent of each other. Moreover, pixels 51 may be shared between event detection circuitry and pixel signal generating circuitry either by respective circuitry or by time multiplexing. But pixels 51 may also be divided such that there are event detection pixels and pixel signal generating pixels. These pixels 51 may be interleaved in the same pixel array or may be part of different pixel arrays on the same die or even be arranged on different dies.

In all these configurations event detection circuitry operates on a first subset of pixels 51 and is configured to detect as event data intensity changes above a predetermined threshold of the light received by each of the first subset of the pixels 51, and pixel signal generating circuitry operates on a second subset of pixels 51 and is configured to generate a pixel signal indicating intensity values of the received light for each pixel of the second subset of the pixels 51.

In the above general description it was assumed that both pixels 51 of the first subset of pixels 51, i.e. EVS pixels, as well as pixels 51 of the second subset of pixels, i.e. APS pixels, may operate in principle based on light having any wavelength. However, in the following, more specific description pixels 51 in the first subset operate on infrared light, i.e. on light having a wavelength in a range from 750 nm to 1,000 $\mu$m, preferably between 780 nm and 3$\mu$m. Pixels 51 in the second subset operate on visible light, i.e. on light having a wavelength between 400 nm and 700 nm.

In order to allow gathering or transmission of information beyond the observable scene (i.e. beyond the two dimensional intensity distribution observable by a sensor device) a sensor device 10 is provided that uses EVS pixels which are sensitive to infrared light to detect such information. Fig. 15 schematically illustrates such a sensor device 10.

As shown in Fig. 15 the sensor device 10 for observing a scene S comprises a plurality of pixels 51 each configured to receive light from the scene and to perform photoelectric conversion to generate an electrical signal. As described below, the pixels may be arranged in a two dimensional pattern or pixel array 51a on a single die or wafer, but may also be provided on different, stacked wafers. Further, "pixel" shall in the following also comprise configurations in which a plurality of photoelectric conversion elements (like photodiodes) are read out together to produce a single electrical signal. Referring to such a configuration also as a singular "pixel" shall not be considered limiting, but only serves to ease the description.

As indicated above, different pixels 51 may be particularly sensitive to specific wavelength ranges. Accordingly, photoelectric conversion elements are used in the pixels 51 that are designed to have a high sensitivity in the respective wavelength ranges. In particular, photoelectric conversion elements sensitive to blue light (380 nm or 430 nm to 490 nm), green light (490 nm to 570 nm or 600 nm or 640 nm), red light (570 nm or 600 nm or 640 nm to 780 nm), or infrared light (780 nm to 3,000 nm or 50,000 nm or 1 mm) may be used. Alternatively or additionally, wavelength sensitivity may be supported or generated by according color filters.

As schematically illustrated in Fig. 15, the pixels 51 are at least separated into two subsets S1, S2. Pixels 51 of the first subset S1 are sensitive to infrared light, while pixels 51 of the second subset S2 are at least sensitive to visible light.

The sensor device 10 comprises event detection circuitry 20 that is configured to detect as event data intensity changes above a predetermined threshold of infrared light received by each pixel 51 of the first subset S1. The pixels 51 of the first subset S1 are therefore operated via the event detection circuitry 20 as EVS pixels, e.g. as described above with respect to Figs. 5 to 7.

The sensor device 10 also comprises pixel signal generating circuitry 30 that is configured to generate pixel signals indicating intensity values of visible light received by each pixel 51 of the second subset S2. The pixels 51 of the second subset S2 are therefore operated by the pixel signal generating circuitry 30 as APS pixels that generate e.g. RGB images with a given framerate. Here, it should be noted that the pixel signal generating circuitry 30 may also operate on the signals provided from the pixels 51 of the first subset S1, e.g. in a time multiplexed manner.

A control unit 40 of the sensor device 10 is then configured to extract additional information from the event data detected within the received infrared light, which additional information differs from two-dimensional intensity information on the observed scene S. The control unit 40 may be any kind of processor, circuitry, hardware or software that is capable to carry out the functions of the control unit 40 described herein. The control unit 40 may be located on the same wafer/chip/die as the pixel array 51a and/or the readout circuitry 20, 30 or may be arranged separately or even externally.

The control unit 40 receives the event data generated by the event detection circuitry 20 based on the received infrared light. Within the infrared light specific information can be encoded that goes beyond the mere infrared intensity of the objects visible in the scene, i.e. that refers to something else than the apparent arrangement of objects O on the scene S.

For example, the sensor device 10 captures a RGB image of the scene S with the second subset S2 of pixels 51. In addition, the sensor device 10 captures event data, e.g. positive polarity events P and negative polarity events N. These events may form specific spatial, temporal or spatiotemporal patterns that represent the information encoded in the received infrared light. The control unit 40 is then capable to track, identify and decode this information from the detected events. The functionality of the control unit 40 goes therefore beyond a mere registration or detection of the specific patterns of infrared light that have been received. Instead the infrared (event) signal is understood to be a code that carries additional information and is accordingly decoded to obtain this additional information.

In the lower part of Fig. 15 an example of an image of the observed scene S at a given point in time is illustrated. The image consists of the RGB frame showing objects O within the scene S. Overlaid are the positions of positive polarity events P and negative polarity events N. The positive polarity events P are generated due the appearance of a vertical infrared line illuminating the objects in the scene, while the negative polarity events N are generated due to the disappearance of such a line.

In a conventional system the obtained image would simply show the RGB image of the scene with an overlay of the infrared lines as visualized in the lower part of Fig. 15. In contrast, the above described control unit 40 is capable to recognize that the particular form of the projection of the appearing and disappearing infrared line indicates the three-dimensional shape of the objects O in the scene S. In this sense the control unit 40 is configured to decode additional information that differs from mere two-dimensional intensity information on the observed scene S.

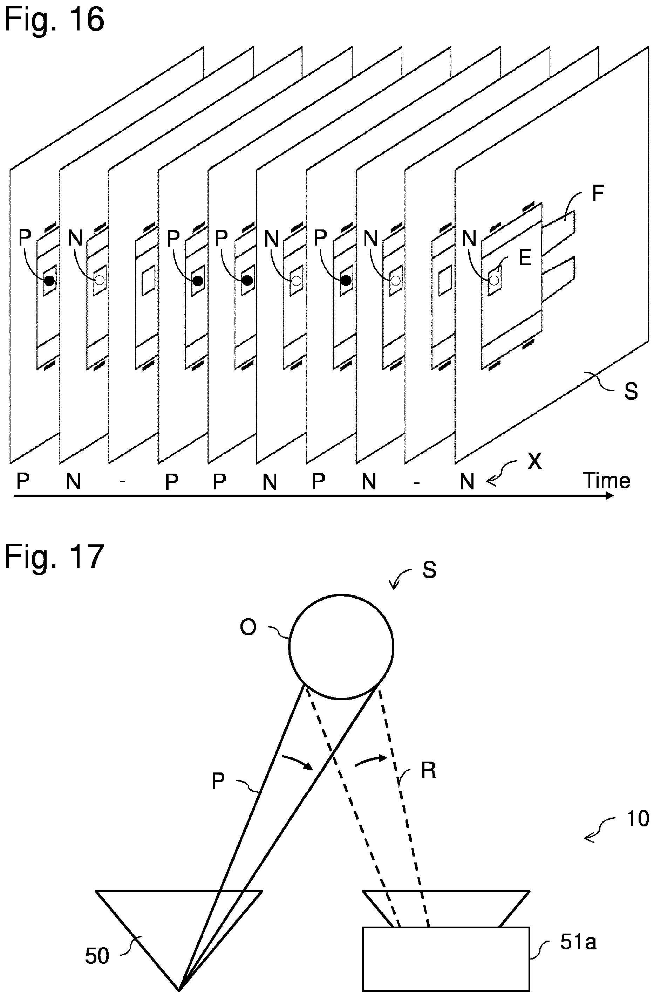

In a similar manner the control unit 40 may also be configured to decode as additional information a signal X in a narrow sense, which is encoded in the received infrared light. This is exemplary illustrated in Fig. 16.

Fig. 16 shows a series of RGB frames captured via the second subset S2 of pixels 51. The captured scene comprises a top view of a forklift F having an infrared light emitter E on its roof. Overlaid over the RGB frames is shown a series of positive polarity events P and negative polarity events N that result from intensity changes of the emitted infrared light. As illustrated at the bottom of Fig. 16 the sequence of negative polarity events N, positive polarity event P and the lack of events forms a signal X in time that can be used to provide the sensor device 10 with additional information beyond the mere indication of the intensity of the light emitted from the infrared light emitter E.

Further, it has to be noted that event detection is performed with much less latency, i.e. much higher frame rate, than the capturing of RGB frames. Thus, the illustration of Fig. 16 is a simplification in that between RGB frames many events can be detected, which greatly enhances the information density that can be received via the sensor device 10 compared with the case where signal changes are only observable with the frame rate of the pixel signal generating circuitry 30.

In particular, the signal X encoded in the received infrared light may be a communication signal that is preferably generated by modulating the infrared light with high frequencies. As illustrated in Fig. 16 one possible application of such an extra IR communication channel may be the surveillance of objects such as forklifts or robots. In this manner a RGB video stream can be supplemented with additional information like e.g. an ID of the monitored object, an operation status (idle vs. occupied), a currently executed task, an operator or the like, however, without the need to provide additional communication equipment. RGB information will be obtained automatically synchronized with the additional information, and can be combined to more profound surveillance data.

A further application example for signal encoding by the sensor device lies in the field of computer gaming, in particular in virtual reality applications. Here, infrared light emitters can be provided on equipment to be worn by a user, such as virtual reality glasses/masks, and provide signals that allow to determine the position of a user as well as to convey additional information, like e.g. an ID of the worn equipment, of the user (in particular if several users are in the same room), or via recognition of a Doppler shift relative movements of the user with respect to the sensor device 10. Thus, also in this case additional information can be transferred via infrared signaling, while the RGB video channel remains open for video calls or for video streaming.

As discussed above, the sensor device 10 may be used to detect infrared light patterns to deduce the three-dimensional shape of objects O within the scene S. As illustrated in Fig. 17 the sensor device 10 may to this end further comprise an infrared light transmitter 50 that is configured to emit a predetermined, time-varying infrared light pattern P onto the scene S. The control unit 40 is then configured to generate based on reflections R of the predetermined, time-varying infrared light pattern P on the scene S as additional information depth information indicating the distance of objects O in the scene S to the sensor device 10.

Thus, in addition to capturing RGB images of the scene S the sensor device 10 includes structured light equipment that allows reconstructing the distances between observed parts of the scene S to the sensor device 10. Since the principles of structured light are known to a skilled person, only a brief repetition of these principles will be given here.

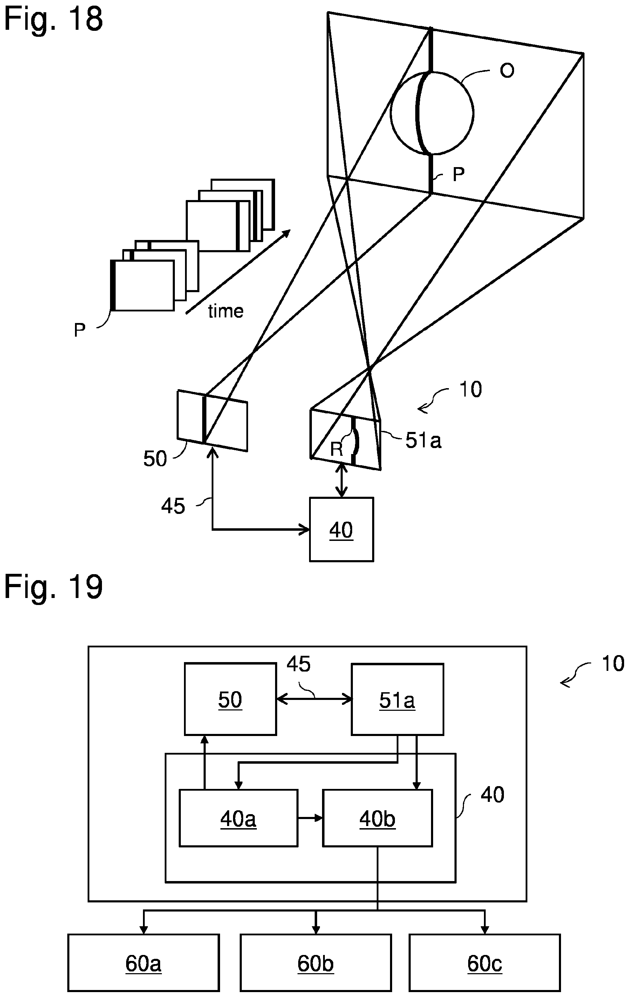

As shown in the schematic illustrations of Figs. 17 and 18, the infrared light transmitter 50, e.g. an infrared vertical-cavity surface-emitting laser, VCSEL, an infrared photodiode array or the like, project a known, but temporally varying pattern P onto the scene S, for example one or a plurality of vertical lines whose positions change with time. The pattern P will be reflected by objects O in the scene. This reflection R forms an according signal on the pixel array 51a of the sensor device 10. The change of position of the reflection R as well as the deviation from the form of the original pattern P allows to determine distances to all the visible parts of the scene S, e.g. by triangulation when the base line between infrared light transmitter 50 and pixel array 51a is known. This base line can either be determined via calibration at installation, if infrared light transmitter 50 and pixel array 51a are located in different elements of the sensor device 10. Or it will be fixed if both parts are provided with fixed spatial relation, e.g. in a common housing.

In this manner a three-dimensional representation of the scene S can be obtained. Since event detection operates with much shorter time constants than intensity frame detection, a plurality of sweeps of the infrared light pattern across the scene can be performed within a single frame capturing period of the APS pixels of the second subset S2. It is thus possible to provide a conventional video stream in real time with a three-dimensional representation of the observed scene S.

As shown in Fig. 18, the sensor device 10 may comprise a, preferably cable bound, communication connection 45 between the infrared light transmitter 50 and the control unit 40 that allows synchronization of the light projected from the infrared light transmitter 50 and the event data detected due to reception of infrared light. This allows the control unit 40 to know which specific infrared light pattern P was projected onto the scene S at which time, and how this was distorted by the reflection from the scene S. In this manner the accuracy of the depth reconstruction and hence of the generated three-dimensional model of the scene S will be improved. Providing the communication connection 45 cable bound makes the synchronization fail-safe. On the other hand, if infrared light transmitter 50 and pixel array 51a are provided in separate elements, wireless communication might be preferable.

Fig. 19 shows a schematic and exemplary functional block diagram of the sensor device 10 comprising the infrared light transmitter 50 in addition to the pixel array 51a. As explained above, the infrared light transmitter 50 and the pixel array 51a may operate synchronized based on the communication connection 45. The pixel array transfers EVS data obtained by the event detection circuitry 20 and RGB data obtained by the pixel signal generating circuitry 30 to the control unit 40. The EVS data are fed to a structured light process 40a carried out by the control unit 40, which process also controls the projection of the infrared light pattern via the infrared light transmitter 50.

The depth map established in the structured light process is provided together with the RGB data to a data fusion process 40b carried out by the control unit 40, in which both data sets are fused. Data fusion might be carried out by merely concatenating corresponding data, e.g. by providing a depth value to each RGB pixel value. However, there might also be more complex data fusion processes applied, like e.g. establishing of a virtual three-dimensional model of the observed scene that could also be used to re-render the observed scene from different perspectives.

Based on the fused data a variety of processes can be carried out. For example, a background subtraction process 60a may rely on an improved separation of foreground and background that is based on a distance threshold, i.e. that only maintains pixel signals having a depth value that is smaller than the distance threshold.

Based on a three-dimensional model of an observed person, an avatar of the person (or the person itself) might be rendered and controlled in an avatar process 60b. Similarly, a three-dimensional model of an observed human head might be generated in a viewpoint correction process 60c in order to allow a virtual change of the viewpoint of the sensor device 10.

Here, the processes 60a, 60b, 60c carried out based on the fused data can be executed by the control unit 40 or - as illustrated in Fig. 19 - by an external device such as a personal computer.

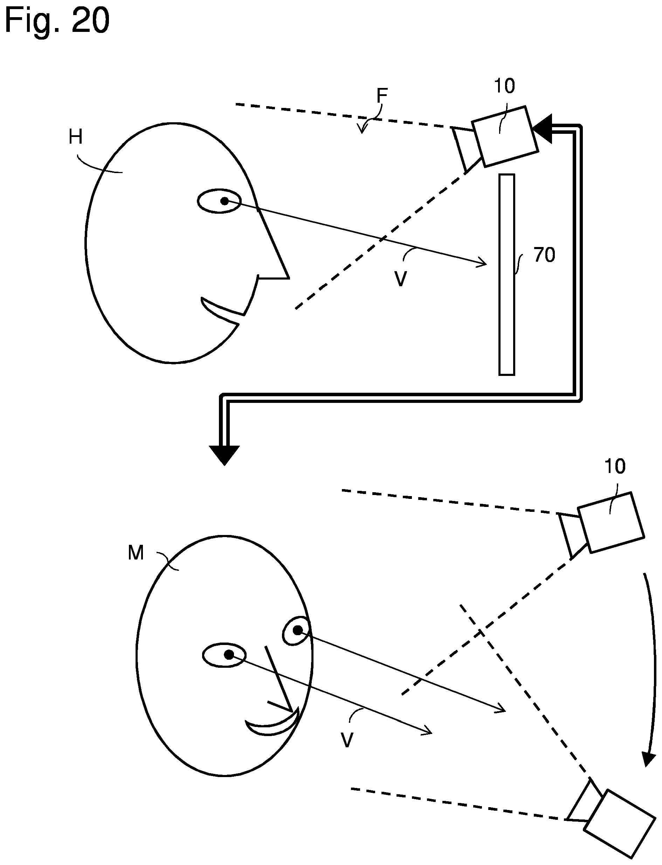

Fig. 20 explains schematically the principles of the viewpoint correction process 60c. As shown in Fig. 20 a human head H is part of the observed scene. The person is using the sensor device 10 to capture a video stream of it, while concentrating at the same time on contents displayed on a screen 70. For example, the sensor device 10 is used as camera for a video conference.

As indicated by line of sight V of the person, the user's view is directed to the screen 70, but not to the sensor device 10. For this reason, the person does not look into the field of view F of the sensor device 10, but looks past it. Other conference participants will therefore have the impression that the person is looking past them and not towards them.

From the sensor device 10 infrared light patterns are projected onto the head H as described above. The control unit 40 is then configured to generate based on the pixel signals indicating the intensity values of visible light and the depth information data of a virtual three-dimensional model M of the human head H. This is illustrated in the lower part of Fig. 20, where a three-dimensional representation M of the head H is shown.

Based on the data of this three-dimensional representation M the control unit 40 may, amongst others, be configured to generate modified image data that allow rendering of the human head H on a display with an adjusted viewing direction. Thus, in the three-dimensional representation M of the scene S, which includes the head H, the field of view F of the sensor device 10 is virtually shifted such that the viewing direction V lies within the field of view. The adjusted pixel signals may be generated and outputted automatically such that the sensor device 10 produces only videos of a person in which the person looks into the sensor device 10. This allows more natural video conferencing, since participants of the conference can talk to each other as if meeting face to face. Alternatively, the control unit may also only provide the data necessary for the viewpoint correction to allow the viewpoint correction on the computer of a recipient of the data.

The three-dimensional representation of the captured person as well as the viewpoint correction may be generated by using neuronal networks, in particular if occluded parts of the head H need to be reconstructed in order to render the head H with an adjusted line of sight V.

While in the above possible applications of the sensor device 10 have been described the following description is directed to the pixel and circuit structure of the sensor device 10. Here, it should be noted that the specific realization of sensor materials, pixel and/or readout circuitry is in principle known to a skilled person and in this sense arbitrary. Therefore, in the following the focus will be on the general arrangement of the different parts of the sensor device 10, but will omit in principle known details wherever possible.

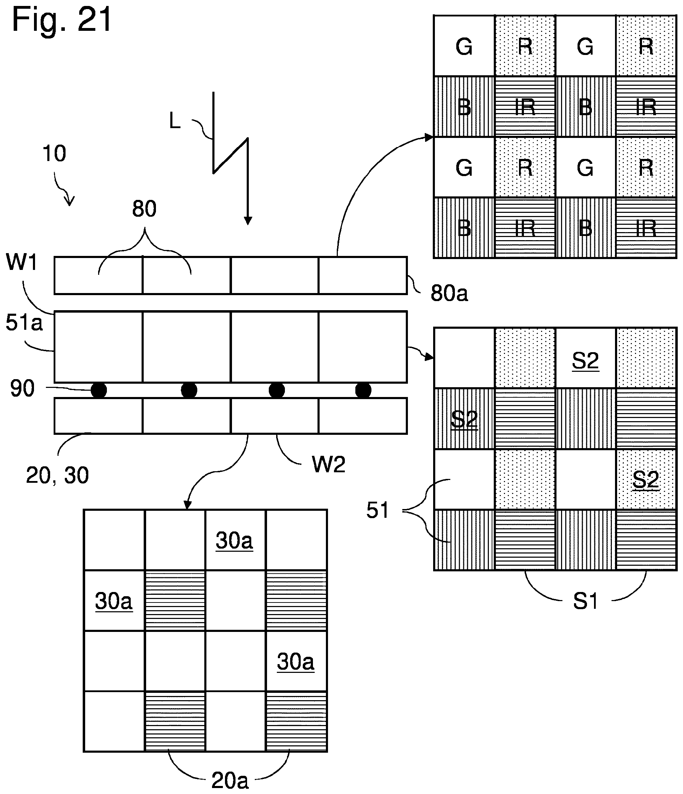

As shown in Figs. 21 to 24 the sensor device 10 may comprise in addition to the plurality of pixels 51 a plurality of color filters 80 that are arranged such that at least visible light reaches the pixels 51 of the second subset S2 of pixels 51 and that only infrared light reaches the pixels 51 of the first subset S1 of pixels 51. This guarantees that the additional information is received at the event detecting pixels of the first subset S1 without disturbances from visible light and ensures therefore a good transmission quality.

As exemplary shown in Fig. 21 the pixels 51 may be arranged in a pixel array 51a having a plurality of 2 x 2 pixel groups that contain each one pixel 51 of the first subset S1 of pixels 51 and three pixels 51 of the second subset S2 of pixels 51. The plurality of color filters 80 are arranged accordingly in a color filter array 80a that has red (R), green (G), blue (B) and infrared (IR) filters, where to each 2 x 2 pixel group one red (R), one green (G), one blue (B), and one infrared (IR) filter is assigned, with the infrared filter (IR) being assigned to the pixel 51 of the first subset S1 of pixels 51. The color filters 80 may in particular be arranged in a modified Bayer pattern in which in each 2 x 2 color filter block one green filter is replaced with an IR filter.

By this arrangement it is guaranteed that each 2 x 2 pixel group receives RGB information and is capable to detect events in the infrared channel. Thus, the spatial resolution of the RGB signal and the event data is comparable. Moreover, also the pixels 51 of the first subset S1 may be read out in a shared or time multiplexed manner by the pixel single generating circuitry 20 in order to supplement the RGB channels with an IR channel. Here, the APS pixels in the second subset S2 as well as the EVS pixel in the first subset S1 may be designed to be specifically sensitive to the wavelength transmitted through the corresponding color filter, as indicated in Fig. 21 by the corresponding texture of the color filters 80 and the pixels 51.

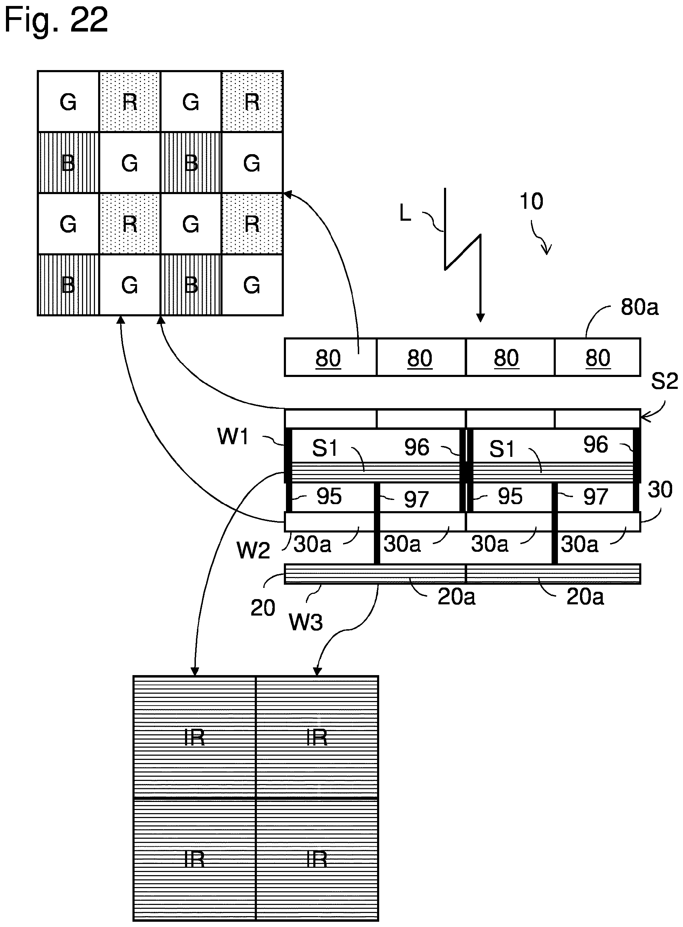

A different possible implementation of the arrangement of pixels 51 and color filters 80 is illustrated in Figs. 22 to 24. Here, the pixels 51 are arranged in groups of five pixels 51 on a first wafer W1, where one pixel 51 of the first subset S1 is arranged with respect to a direction of light incidence behind 2 x 2 pixels 51 of the second subset S2. Thus, the APS pixels of the second subset S2 are provided on the light incident surface of the first wafer W1, while one EVS pixel of the first subset S1 is provided on the opposite side of the first wafer W1. The area that can be occupied by the pixels 51 of the first subset S1 corresponds then to four times the area that can be occupied by one of the pixels 51 of the second subset S2. This can be advantageous to compensate on the one hand an increased size of pixels 51 designed for reception of infrared light and on the other hand to increase the sensitivity due to a larger pixel area.

Further, in this case it is possible to arrange the plurality of color filters 80 in a color filter array 80a that has red (R), green (G), and blue filters (B), preferably arranged in a Bayer pattern, which color filters 80 are infrared transparent. In particular, no additional infrared filters are necessary. Infrared light will pass the color filters 80 as well as the pixels 51 of the second subset S2, while visible light will be absorbed by color filters 80 and pixels 51 of the second subset S2 before it can reach the pixels 51 of the second subset S2. Thus, conventional color filter arrays 80a can be used in the sensor device 10, which eases manufacturing.

In all the examples of Figs. 21 to 24 an additional layer is provided that contains the event detection circuitry 20 and the pixel signal generating circuitry 30. Although these circuitries may be provided elsewhere it is preferable due to space constraints to provide them in a stacked manner as illustrated in Figs. 21 to 24. Connections between the pixel array 51a and the event detection circuitry 20 or the pixel signal generating circuitry 30 may then be provided by Cu-Cu-connections 90, by through silicon vias, TSVs, or any other manner that is in principle known to a skilled person.

In all of the exemplary illustrated cases the sensor device 10 comprises the first wafer W1 on which the plurality of pixels 51 are formed. Here, a color filter array 80a as described above may be present. The color filter array 80a may be omissible, if the pixels 51 are designed such as to be only sensitive to the specific wavelength ranges to which otherwise the color filters 80 restrict.

In addition to the first wafer W1 at least one further wafer W2, W3 is provided in a stacked manner on which the event detection circuitry 20 and the pixel signal generating circuitry 30 is formed.

Here, the event detection circuitry 20 is formed from a plurality of first circuit blocks 20a and the pixel signal generating circuitry 30 is formed from a plurality of second circuit blocks 30, wherein the arrangement of the first circuit blocks 20a and the second circuit blocks 30a on the at least one further wafer W2, W3 corresponds to the arrangement of the plurality of pixels 51 on the first wafer W1. Thus, when viewed in the direction of incident light L each pixel 51 covers an area behind which the corresponding readout circuitry is located. This eases connection of pixels 51 and readout circuitry 20, 30, which eases not only manufacturing of the sensor device 10, but allows also a more compact construction.

For example, all pixels 51 may be formed on the side of the first wafer W1 facing the incident light L, i.e. in a back side illumination structure, as shown in Fig. 21. The readout circuitry 20, 30 with the first circuit blocks 20a and the second circuit blocks 30a is then also formed on the same side of a second wafer W2, e.g. also on the light incident side. The first circuit blocks 20a are formed at positions below/behind EVS pixels of the first subset S1 (and, if present, below/behind infrared (IR) color filters 80). Just the same, the second circuit blocks 30a forming the pixel signal generating circuitry 30 are formed below/behind APS pixels of the second subset S2 (and, if present, below/behind RGB color filters 80). Thus, all pixels 51 can be directly connected e.g. via Cu-Cu-connections 90 to the corresponding circuit blocks 20a, 30a.

According to another example shown in Fig. 22 the pixels 51 of the second subset S2 of pixels 51 are formed on the side of the first wafer W1 facing the incident light L, while the pixels 51 of the first subset S1 of pixels 51 are formed on the opposite side of the first wafer W1. Thus, a two sided implementation is chosen as described above, e.g. an implementation in which 2 x 2 APS pixels are located above one (larger) EVS pixel.

Two further wafers W2, W3 are provided, where the one adjacent to the first wafer W1 carries the second circuit blocks 30a and the other one carries the first circuit blocks 20a. Thus, the second wafer W2 and the third wafer W3 are arranged such that the arrangement of circuit blocks 20a, 30a can resemble the arrangement of the corresponding pixels 51. As illustrated in Fig. 22 pixels 51 of the second subset S2 and the second circuit blocks 30a are arranged in corresponding patterns such that first and second connections 95, 96 can be guided between the pixels 51 of the first subset S1 from the second subset S2 of pixels 51 to the second circuit blocks 30a. Just the same, also the pixels 51 of the first subset S1 have a one-to-one correspondence with the first circuit blocks 20a. Here, third connections 97 are guided between the second circuit blocks 30a from the pixels 51 of the first subset S1 to the first circuit blocks 20a.

Although this arrangement is more involved regarding the connection structure, it comes with the advantage that the event detection circuitry 20 and the pixel signal generating circuitry 30 can be formed on different wavers, which eases manufacturing. Further, the event detection circuitry 20 can be formed with first circuit blocks 20a that are larger than in the example where the entire readout circuitry 20, 30 is formed on one side of a single wafer. This allows more flexibility in designing the event detection circuitry 20.

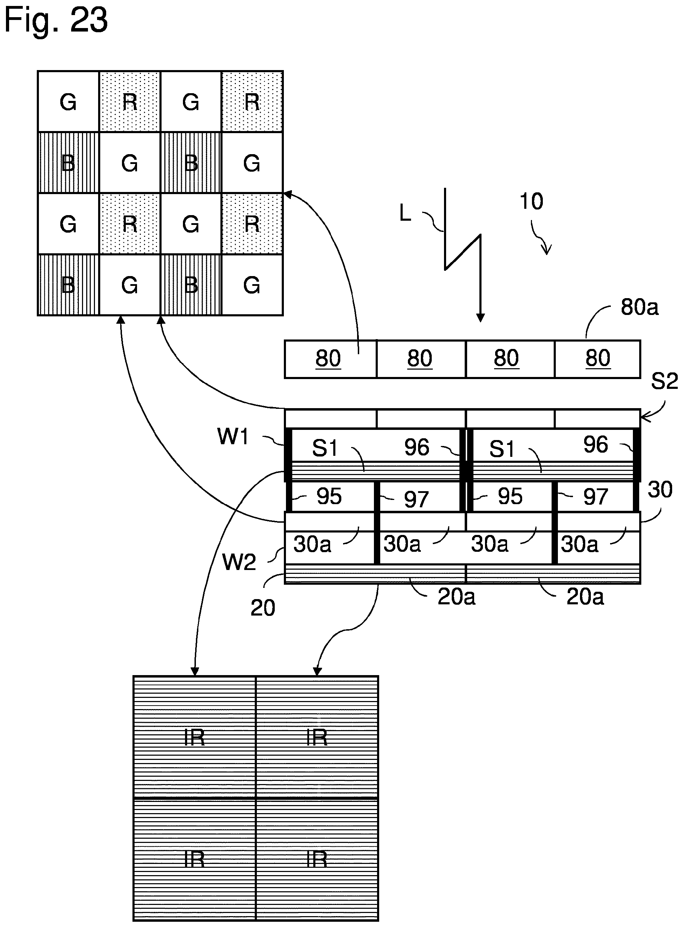

The example shown in Fig. 23 corresponds to the example shown in Fig. 22, except that a single second wafer W2 is used for the readout circuitry. Here, the first circuit blocks 20a and the second circuit blocks 30a are formed on two opposite sides of this second wafer W2, where the side carrying the second circuit blocks 20a is adjacent to the first wafer W1. All other arrangements correspond to the ones discussed above with respect to Fig. 22. The advantage of a single wafer W2 being provided on its two sides with the event detection circuitry 20 and the pixel signal generating circuitry 30 is an improved compactness in the stacking direction, which comes, however, at the cost of a more involved manufacturing process.

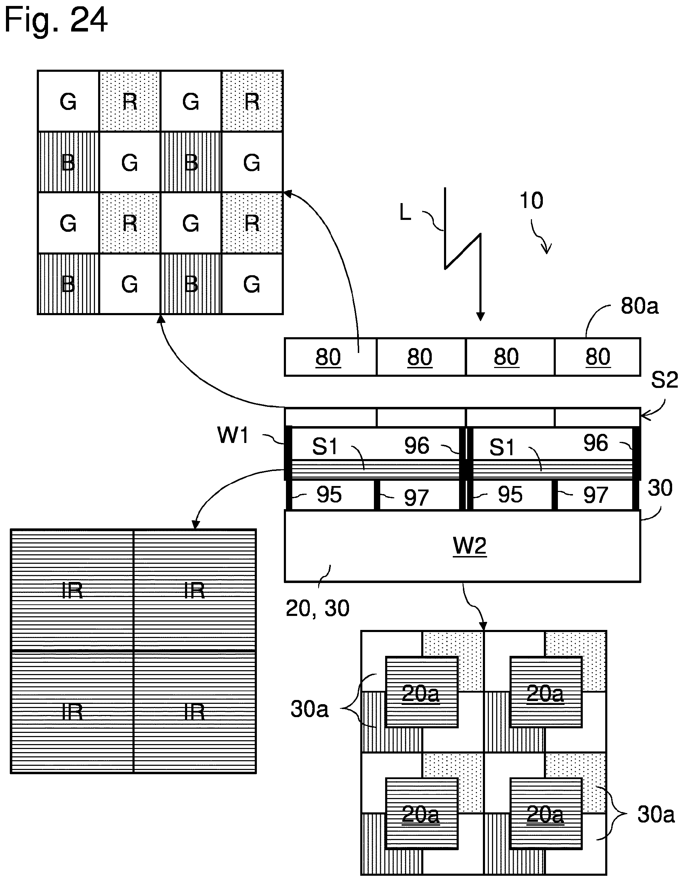

Another example shown in Fig. 24 provides the same pixel structure as discussed with respect to Figs. 22 and 23, i.e. the pixels 51 of the second subset S2 are formed on the side of the first wafer W1 facing the incident light L, while the pixels 51 of the first subset S1 are formed on the opposite side of the first wafer W1. However, here the first circuit blocks 20a and the second circuit blocks 30a are formed on the same side of a second wafer W2 such that the first circuit blocks 20a are encircled by the second circuit blocks 30a.

Thus, as illustrated in Fig. 24 in the center region of each 2 x 2 block of second circuit blocks 30a, which correspond to the RGB pixels 51 provided above them, a first circuit block 20a is arranged that is connected to the corresponding EVS pixel above it. This allows forming the entire readout circuitry 20, 30 on a single wafer. This eases manufacturing and connection to the pixel wafer W1. At the same time sufficient flexibility regarding the size of the first circuit blocks 20a is maintained. In this manner, a highly functional and compact layout of the sensor device 10 can be obtained.

It is to be understood that all the arrangements discussed above are purely exemplary. Essential in these examples is the correspondence of location between APS pixels and their corresponding second circuit blocks 30a as well as between EVS pixels and their corresponding first circuit blocks 20a. In particular, it should be noted that although in the above examples this correspondence was described such that circuit blocks 20a, 30a are arranged directly below/behind their corresponding pixels 51, there might also be a lateral shift between the respective components. Preferably, the shift from a total overlap will still allow a vertical connection between pixels 51 and corresponding blocks 20a, 30a of the readout circuitry 20, 30.

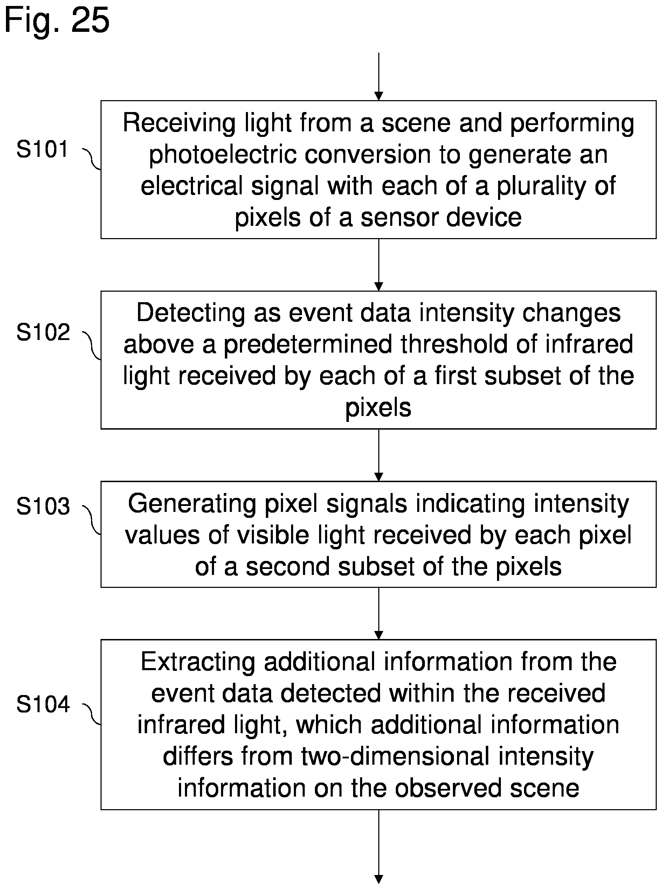

Above various implementations of the basic idea to use infrared light sensitive EVS pixels to receive additional information encoded in the infrared light have been discussed. The basic method underlying all these implementations is summarized below with respect to Fig. 25.

Here, at S101 light from a scene S is received and photoelectric conversion to generate an electrical signal is performed with each of a plurality of pixels 51 of a sensor device 10 used to observe the scene.

At S102 as event data intensity changes above a predetermined threshold of infrared light received by each of a first subset S1 of the pixels 51 are detected with event detection circuitry 20 of the sensor device 10.

At S103 pixel signals indicating intensity values of visible light received by each pixel 51 of a second subset S2 of the pixels 51 are generated with pixel signal generating circuitry 30 of the sensor device 10.

At S104 additional information is extracted from the event data detected within the received infrared light, which additional information differs from two-dimensional intensity information on the observed scene S.

In this manner it is possible to convey additional information e.g. on a three-dimensional shape of an observed object, its identity, its tasks, etc. without the need to provide additional communication equipment. This increases the field in which the sensor device 10 can be used.

Further, it may be possible to simplify existing devices, since otherwise additionally necessary devices can be made superfluous by the functions of the sensor device 10. For example, by using the sensor device 10 on a head mounted display used for augmented/virtual reality applications a separate depth sensor can be omitted. While this apparently reduces the complexity and the cost of the head mounted display it also makes image registration processes between camera and depth sensor unnecessary, which also lowers the required processing power.

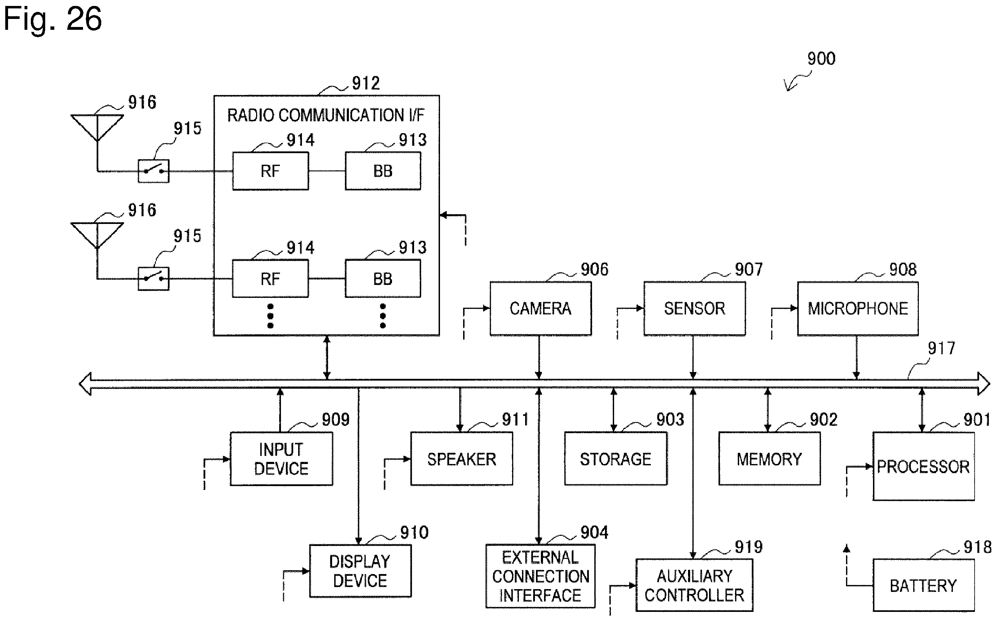

Fig. 26 is a block diagram illustrating an example of a schematic configuration of a smartphone 900 that may constitute or comprise a sensor device 10 as described above. The smartphone 900 is equipped with a processor 901, memory 902, storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be a CPU or system-on-a-chip (SoC), for example, and controls functions in the application layer and other layers of the smartphone 900. The memory 902 includes RAM and ROM, and stores programs executed by the processor 901 as well as data. The storage 903 may include a storage medium such as semiconductor memory or a hard disk. The external connection interface 904 is an interface for connecting an externally attached device, such as a memory card or Universal Serial Bus (USB) device, to the smartphone 900. The processor may function as control unit 40.

The camera 906 includes an image sensor as described above. The sensor 907 may include a sensor group such as a positioning sensor, a gyro sensor, a geomagnetic sensor, and an acceleration sensor, for example. The microphone 908 converts audio input into the smartphone 900 into an audio signal. The input device 909 includes devices such as a touch sensor that detects touches on a screen of the display device 910, a keypad, a keyboard, buttons, or switches, and receives operations or information input from a user. The display device 910 includes a screen such as a liquid crystal display (LCD) or an organic light-emitting diode (OLED) display, and displays an output image of the smartphone 900. The speaker 911 converts an audio signal output from the smartphone 900 into audio.

The radio communication interface 912 supports a cellular communication scheme such as LTE or LTE-Advanced, and executes radio communication. Typically, the radio communication interface 912 may include a BB processor 913, an RF circuit 914, and the like. The BB processor 913 may conduct processes such as encoding/decoding, modulation/demodulation, and multiplexing/demultiplexing, for example, and executes various signal processing for radio communication. Meanwhile, the RF circuit 914 may include components such as a mixer, a filter, and an amp, and transmits or receives a radio signal via an antenna 916. The radio communication interface 912 may also be a one-chip module integrating the BB processor 913 and the RF circuit 914. The radio communication interface 912 may also include multiple BB processors 913 and multiple RF circuits 91. Note that although Fig. 26 illustrates an example of the radio communication interface 912 including multiple BB processors 913 and multiple RF circuits 914, the radio communication interface 912 may also include a single BB processor 913 or a single RF circuit 914.

Furthermore, in addition to a cellular communication scheme, the radio communication interface 912 may also support other types of radio communication schemes such as a short-range wireless communication scheme, a near field wireless communication scheme, or a wireless local area network (LAN) scheme. In this case, a BB processor 913 and an RF circuit 914 may be included for each radio communication scheme.

Each antenna switch 915 switches the destination of an antenna 916 among multiple circuits included in the radio communication interface 912 (for example, circuits for different radio communication schemes).

Each antenna 916 includes a single or multiple antenna elements (for example, multiple antenna elements constituting a MIMO antenna), and is used by the radio communication interface 912 to transmit and receive radio signals. The smartphone 900 may also include multiple antennas 916 as illustrated in Fig. 26. Note that although Fig. 26 illustrates an example of the smartphone 900 including multiple antennas 916, the smartphone 900 may also include a single antenna 916.

Furthermore, the smartphone 900 may also be equipped with an antenna 916 for each radio communication scheme. In this case, the antenna switch 915 may be omitted from the configuration of the smartphone 900.

The bus 917 interconnects the processor 901, the memory 902, the storage 903, the external connection interface 904, the camera 906, the sensor 907, the microphone 908, the input device 909, the display device 910, the speaker 911, the radio communication interface 912, and the auxiliary controller 919. The battery 918 supplies electric power to the respective blocks of the smartphone 900 illustrated in Fig. 26 via power supply lines partially illustrated with dashed lines in the drawing. The auxiliary controller 919 causes minimal functions of the smartphone 900 to operate while in a sleep mode, for example.

Note that, the embodiments of the present technology are not limited to the above-mentioned embodiment, and various modifications can be made without departing from the scope of the claims.

Further, the effects described herein are only exemplary and not limited, and other effects may be provided.

**Claims**

1.  A sensor device (10) for observing a scene (S), the sensor device (10) comprising:

    a plurality of pixels (51) each configured to receive light from the scene and to perform photoelectric conversion to generate an electrical signal;
    event detection circuitry (20) that is configured to detect as event data intensity changes above a predetermined threshold of infrared light received by each of a first subset (S1) of the pixels (51);
    pixel signal generating circuitry (30) that is configured to generate pixel signals indicating intensity values of visible light received by each pixel (51) of a second subset (S2) of the pixels (51); and
    a control unit (40) that is configured

    to extract additional information from the event data detected within the received infrared light, which additional information differs from two-dimensional intensity information on the observed scene (S), and
    to decode as additional information a signal (X) encoded in the received infrared light.

2.  The sensor device (10) according to claim 1, wherein
    the signal (X) encoded in the received infrared light is a communication signal, preferably generated by modulating the infrared light with high frequencies.

3.  The sensor device (10) according to any one of claims 1 to 2, further comprising

    an infrared light transmitter (50) that is configured to emit a predetermined, time-varying infrared light pattern (P) onto the scene(S); wherein
    the control unit (40) is configured to generate based on reflections (R) of the predetermined, time-varying infrared light pattern (P) on the scene (S) as additional information depth information indicating a distance of objects (O) in the scene to the sensor device (10).

4.  The sensor device (10) according to claim 3, further comprising
    a, preferably cable bound, communication connection (45) between the infrared light transmitter (50) and the control unit (40) that allows synchronization of the light emission from the infrared light transmitter (50) and the event data detected due to reception of infrared light.

5.  The sensor device (10) according to any one of claims 3 or 4, wherein
    if a human head (H) is part of the observed scene (S), the control unit (40) is configured to generate based on the pixel signals indicating the intensity values of visible light and the depth information data of a virtual three-dimensional model (M) of the human head, which data allow to render the human head on a display with an adjusted viewing direction.

6.  The sensor device (10) according to any one of claims 1 to 5, further comprising
    a plurality of color filters (80) that are arranged such that at least visible light reaches the pixels (51) of the second subset (S2) of pixels (51) and that only infrared light reaches the pixels (51) of the first subset of pixels (S1).

7.  The sensor device (10) according to claim 6, wherein

    the pixels (51) are arranged in a pixel array (51a) having a plurality of 2 x 2 pixel groups that contain each one pixel (51) of the first subset (S1) of pixels (51) and three pixels (51) of the second subset (S2) of pixels (51); and
    the plurality of color filters (80) are arranged in a color filter array (80a) having red (R), green (G), blue (B) and infrared (IR) filters, where to each 2 x 2 pixel group one red (R), one green (G), one blue (B), and one infrared (IR) filter is assigned, with the infrared filter (IR) being assigned to the pixel (51) of the first subset (S1) of pixels (51).

8.  The sensor device (10) according to claim 6, wherein

    pixels (51) are arranged in groups of five pixels (51), with one pixel (51) of the first subset (S1) of pixels (51) arranged with respect to a direction of light incidence behind 2 x 2 pixels (51) of the second subset (S2) of pixels (51); and
    the plurality of color filters (80) are arranged in a color filter array (80a) having red (R), green (G), and blue filters (B), preferably arranged in a Bayer pattern, which color filters (80) are infrared transparent.

9. The sensor device (10) according to any one of claims 1 to 8, further comprising

a first wafer (W1) on which the plurality of pixels (51) is formed; and
at least one further wafer (W2, W3) on which the event detection circuitry (20) and the pixel signal generating circuitry (30) is formed; wherein
the event detection circuitry (20) is formed from a plurality of first circuit blocks (20a);
the pixel signal generating circuitry (30) is formed from a plurality of second circuit blocks (30a); and
the arrangement of the first circuit blocks (20a) and the second circuit blocks (30a) on the at least one further wafer (W2, W3) corresponds to the arrangement of the plurality of pixels (51) on the first wafer (W1).

10. The sensor device (10) according to claim 9, wherein

all pixels (51) are formed on the side of the first wafer (W1) facing the scene (S); and
the first circuit blocks (20a) and the second circuit blocks (30a) are formed on the same side of a second wafer (W2).

11. The sensor device (10) according to claim 9, wherein

the pixels (51) of the second subset (S2) of pixels (51) are formed on the side of the first wafer (W1) facing the scene (S), while the pixels (51) of the first subset (S1) of pixels (51) are formed on the opposite side of the first wafer (W1); and
two further wafers (W2, W3) are provided, where the one adjacent to the first wafer (W1) carries the second circuit blocks (30a) and the other one carries the first circuit blocks (20a).

12. The sensor device (10) according to claim 9, wherein

the pixels (51) of the second subset (S2) of pixels (51) are formed on the side of the first wafer (W1) facing the scene (S), while the pixels (51) of the first subset (S1) of pixels (51) are formed on the opposite side of the first wafer (W1); and
the first circuit blocks (20a) and the second circuit blocks (30a) are formed on two opposite sides of a second wafer (W2), where the side carrying the second circuit blocks (30a) is adjacent to the first wafer (W1).

13. The sensor device (10) according to claim 9, wherein

the pixels (51) of the second subset (S2) of pixels (51) are formed on the side of the first wafer (W1) facing the incident light (L), while the pixels (51) of the first subset (S1) of pixels (51) are formed on the opposite side of the first wafer (W1); and
the first circuit blocks (20a) and the second circuit blocks (30a) are formed on the same side of a second wafer (W2) such that the first circuit blocks (20a) are encircled by the second circuit blocks (30a).

14. A method for operating a sensor device (10) for observing a scene (S), the method comprising:

receiving light from the scene (S) and performing photoelectric conversion to generate an electrical signal with each of a plurality of pixels (51) of the sensor device (10);
detecting, with event detection circuitry (20) of the sensor device (10), as event data intensity changes above a predetermined threshold of infrared light received by each of a first subset (S1) of the pixels (51);
generating, with pixel signal generating circuitry (30), pixel signals indicating intensity values of visible light received by each pixel (51) of a second subset (S2) of the pixels (51); and
extracting additional information from the event data detected within the received infrared light, which additional information differs from two-dimensional intensity information on the observed scene (S), and
decoding as additional information a signal (X) encoded in the received infrared light.

**Patentansprüche**

1. Sensorvorrichtung (10) zum Beobachten einer Szene (S), die Sensorvorrichtung (10) umfassend:

eine Vielzahl von Pixeln (51), die jeweils konfiguriert sind, um Licht von der Szene zu empfangen und um eine photoelektrische Umwandlung durchzuführen, um ein elektrisches Signal zu erzeugen;

eine Ereignisdetektionsschaltung (20), die konfiguriert ist, um als Ereignisdaten Intensitätsänderungen oberhalb einer zuvor bestimmten Schwelle von Infrarotlicht zu detektieren, das durch jeden einer ersten Teilmenge (S1) der Pixel (51) empfangen wird;

eine Pixelsignalerzeugungsschaltung (30), die konfiguriert ist, um Pixelsignale zu erzeugen, die Intensitätswerte von sichtbarem Licht anzeigen, das durch jedes Pixel (51) einer zweiten Teilmenge (S2) der Pixel (51) empfangen wird; und

eine Steuereinheit (40), die konfiguriert ist

um zusätzliche Informationen aus den Ereignisdaten zu extrahieren, die innerhalb des empfangenen Infrarotlichts detektiert werden, wobei sich diese zusätzlichen Informationen von zweidimensionalen Intensitätsinformationen über die beobachtete Szene (S) unterscheiden, und

um als zusätzliche Information ein Signal (X) zu decodieren, das in dem empfangenen Infrarotlicht codiert wird.

2. Sensorvorrichtung (10) nach Anspruch 1, wobei

das Signal (X), das in dem empfangenen Infrarotlicht codiert ist, ein Kommunikationssignal ist, vorzugsweise durch Modulieren des Infrarotlichts mit hohen Frequenzen erzeugt.

3. Sensorvorrichtung (10) nach einem der Ansprüche 1 bis 2, ferner umfassend

einen Infrarotlichtsender (50), der konfiguriert ist, um ein zuvor bestimmtes, zeitlich variierendes Infrarotlichtmuster (P) auf die Szene (S) abzugeben; wobei

die Steuereinheit (40) konfiguriert ist, um basierend auf Reflexionen (R) des zuvor bestimmten, zeitveränderlichen Infrarotlichtmusters (P) an der Szene (S) als zusätzliche Information Tiefeninformation zu erzeugen, die einen Abstand von Objekten (O) in der Szene zu der Sensorvorrichtung (10) anzeigt.

4. Sensorvorrichtung (10) nach Anspruch 3, ferner umfassend

eine, vorzugsweise kabelgebundene, Kommunikationsverbindung (45) zwischen dem Infrarotlichtsender (50) und der Steuereinheit (40), die eine Synchronisation der Lichtemission von dem Infrarotlichtsender (50) und der Ereignisdaten, die aufgrund eines Empfangs von Infrarotlicht erfasst werden, ermöglicht.

5. Sensorvorrichtung (10) nach einem der Ansprüche 3 bis 4, wobei

falls ein menschlicher Kopf (H) Teil der beobachteten Szene (S) ist, die Steuereinheit (40) konfiguriert ist, um basierend auf den Pixelsignalen, die die Intensitätswerte von sichtbarem Licht anzeigen, und den Tiefeninformationsdaten eines virtuellen dreidimensionalen Modells (M) des menschlichen Kopfes zu erzeugen, welche Daten es ermöglichen, den menschlichen Kopf auf einer Anzeige mit einer angepassten Betrachtungsrichtung zu rendern.

6. Sensorvorrichtung (10) nach einem der Ansprüche 1 bis 5, ferner umfassend

eine Vielzahl von Farbfiltern (80), die derart angeordnet sind, dass mindestens sichtbares Licht die Pixel (51) der zweiten Teilmenge (S2) von Pixeln (51) erreicht und dass nur Infrarotlicht die Pixel (51) der ersten Teilmenge von Pixeln (S1) erreicht.

7. Sensorvorrichtung (10) nach Anspruch 6, wobei

die Pixel (51) in einer Pixelmatrix (51a) angeordnet sind, die eine Vielzahl von 2 x 2 Pixelgruppen aufweist, die jeweils ein Pixel (51) und

die Vielzahl von Farbfiltern (80) in einer Farbfiltermatrix (80a) angeordnet ist, die rote (R), grüne (G), blaue (B) und Infrarot(IR)-Filter aufweist, wobei jeder 2 x 2-Pixelgruppe ein roter (R), ein grüner (G), ein blauer (B) und ein Infrarot(IR)-Filter zugeordnet ist, wobei der Infrarotfilter (IR) dem Pixel (51) der ersten Teilmenge (S1) von Pixeln (51) zugeordnet ist.

8. Sensorvorrichtung (10) nach Anspruch 6, wobei

Pixel (51) in Gruppen von fünf Pixeln (51) angeordnet sind, wobei ein Pixel (51) der ersten Teilmenge (S1) von Pixeln (51) hinsichtlich einer Richtung des Lichteinfalls hinter 2 x 2 Pixeln (51) der zweiten Teilmenge (S2) von Pixeln (51) angeordnet ist; und

die Vielzahl von Farbfiltern (80) in einer Farbfiltermatrix (80a) angeordnet, die rote (R), grüne (G) und blaue Filter (B) aufweist, vorzugsweise in einem Bayer-Muster angeordnet ist, wobei de Farbfilter (80) infrarotdurchlässig sind.

9. Sensorvorrichtung (10) nach einem der Ansprüche 1 bis 8, ferner umfassend

   einen ersten Wafer (W1), auf dem die Vielzahl von Pixeln (51) ausgebildet ist; und
   mindestens einen weiteren Wafer (W2, W3), auf dem die Ereignisdetektionsschaltung (20) und die Pixelsignalerzeugungsschaltung (30) ausgebildet ist; wobei
   die Ereignisdetektionsschaltung (20) aus einer Vielzahl von ersten Schaltungsblöcken (20a) ausgebildet ist;
   die Pixelsignalerzeugungsschaltung (30) aus einer Vielzahl von zweiten Schaltungsblöcken (30a) ausgebildet ist; und
   die Anordnung der ersten Schaltungsblöcke (20a) und der zweiten Schaltungsblöcke (30a) auf dem mindestens einen weiteren Wafer (W2, W3) der Anordnung der Vielzahl von Pixeln (51) auf dem ersten Wafer (W1) entspricht.

10. Sensorvorrichtung (10) nach Anspruch 9, wobei

    alle Pixel (51) auf der Seite des ersten Wafers (W1) ausgebildet sind, die der Szene (S) zugewandt ist; und
    die ersten Schaltungsblöcke (20a) und die zweiten Schaltungsblöcke (30a) auf derselben Seite eines zweiten Wafers (W2) ausgebildet sind.

11. Sensorvorrichtung (10) nach Anspruch 9, wobei

    die Pixel (51) der zweiten Teilmenge (S2) von Pixeln (51) auf der Seite des ersten Wafers (W1) ausgebildet sind, die der Szene (S) zugewandt ist, während die Pixel (51) der ersten Teilmenge (S1) von Pixeln (51) auf der gegenüberliegenden Seite des ersten Wafers (W1) ausgebildet sind; und
    zwei weitere Wafer (W2, W3) bereitgestellt sind, wobei der eine, der an den ersten Wafer (W1) angrenzt, die zweiten Schaltungsblöcke (30a) trägt und der andere die ersten Schaltungsblöcke (20a) trägt.

12. Sensorvorrichtung (10) nach Anspruch 9, wobei

    die Pixel (51) der zweiten Teilmenge (S2) von Pixeln (51) auf der Seite des ersten Wafers (W1) ausgebildet sind, die der Szene (S) zugewandt ist, während die Pixel (51) der ersten Teilmenge (S1) von Pixeln (51) auf der gegenüberliegenden Seite des ersten Wafers (W1) ausgebildet sind; und
    die ersten Schaltungsblöcke (20a) und die zweiten Schaltungsblöcke (30a) auf zwei gegenüberliegenden Seiten eines zweiten Wafers (W2) ausgebildet sind, wobei die Seite, die die zweiten Schaltungsblöcke (30a) trägt, an den ersten Wafer (W1) angrenzt.

13. Sensorvorrichtung (10) nach Anspruch 9, wobei

    die Pixel (51) der zweiten Teilmenge (S2) von Pixeln (51) auf der Seite des ersten Wafers (W1) ausgebildet sind, die dem einfallenden Licht (L) zugewandt ist, während die Pixel (51) der ersten Teilmenge (S1) von Pixeln (51) auf der gegenüberliegenden Seite des ersten Wafers (W1) ausgebildet sind; und
    die ersten Schaltungsblöcke (20a) und die zweiten Schaltungsblöcke (30a) auf derselben Seite eines zweiten Wafers (W2) derart ausgebildet sind, dass die ersten Schaltungsblöcke (20a) von den zweiten Schaltungsblöcken (30a) umschlossen sind.

14. Verfahren zum Betreiben einer Sensorvorrichtung (10) zum Beobachten einer Szene (S), das Verfahren umfassend:

    Empfangen von Licht aus der Szene (S) und Durchführen der photoelektrischen Umwandlung, um ein elektrisches Signal mit jedem einer Vielzahl von Pixeln (51) der Sensorvorrichtung (10) zu erzeugen;
    Erfassen, mit einer Ereigniserfassungsschaltung (20) der Sensorvorrichtung (10), als Ereignisdaten von Intensitätsänderungen oberhalb einer zuvor bestimmten Schwelle von Infrarotlicht, das durch jeden einer ersten Teilmenge (S1) der Pixel (51) empfangen wird;
    Erzeugen, mit der Pixelsignalerzeugungsschaltung (30), von Pixelsignalen, die Intensitätswerte von sichtbarem Licht anzeigen, das durch jedes Pixel (51) einer zweiten Teilmenge (S2) der Pixel (51) empfangen wird; und
    Extrahieren zusätzlicher Informationen aus den Ereignisdaten, die innerhalb des empfangenen Infrarotlichts detektiert werden, wobei sich die zusätzlichen Informationen von zweidimensionalen Intensitätsinformationen über die beobachtete Szene (S) unterscheiden, und
    Decodieren als zusätzliche Information eines Signals (X), das in dem empfangenen Infrarotlicht codiert wird.

**EP 4 500 872 B1**

**Revendications**

1. Dispositif capteur (10) permettant d'observer une scène (S), le dispositif capteur (10) comprenant :

   une pluralité de pixels (51) configurés chacun pour recevoir de la lumière provenant de la scène et pour mettre en œuvre une conversion photoélectrique pour générer un signal électrique ;
   un système de circuits de détection d'événement (20) qui est configuré pour détecter en guise de données d'événement des changements d'intensité au-dessus d'un seuil prédéterminé de lumière infrarouge reçue par chacun parmi un premier sous-ensemble (S1) des pixels (51) ;
   un système de circuits de génération de signaux de pixel (30) qui est configuré pour générer des signaux de pixel indiquant des valeurs d'intensité de lumière visible reçue par chaque pixel (51) d'un second sous-ensemble (S2) des pixels (51) ; et
   une unité de commande (40) qui est configurée
   pour extraire des informations supplémentaires à partir des données d'événement détectées au sein de la lumière infrarouge reçue, ces informations supplémentaires différant des informations d'intensité à deux dimensions sur la scène observée (S), et
   pour décoder en guise d'informations supplémentaires un signal (X) encodé dans la lumière infrarouge reçue.

2. Dispositif capteur (10) selon la revendication 1, dans lequel
   le signal (X) encodé dans la lumière infrarouge reçue est un signal de communication, de préférence généré en modulant la lumière infrarouge avec des hautes fréquences.

3. Dispositif capteur (10) selon l'une quelconque des revendications 1 à 2, comprenant en outre

   un transmetteur de lumière infrarouge (50) qui est configuré pour émettre un motif de lumière infrarouge à variation temporelle (P) prédéterminé sur la scène (S) ; dans lequel
   l'unité de commande (40) est configurée pour générer en fonction de réflexions (R) du motif de lumière infrarouge à variation temporelle (P) prédéterminé sur la scène (S) en guise d'informations supplémentaires des informations de profondeur indiquant une distance d'objets (O) dans la scène par rapport au dispositif capteur (10).

4. Dispositif capteur (10) selon la revendication 3, comprenant en outre
   une connexion de communication (45), de préférence reliée par câble, entre le transmetteur de lumière infrarouge (50) et l'unité de commande (40) qui permet une synchronisation de l'émission de lumière en provenance du transmetteur de lumière infrarouge (50) et des données d'événement détectées en raison de la réception de lumière infrarouge.

5. Dispositif capteur (10) selon l'une quelconque des revendications 3 ou 4, dans lequel
   si une tête humaine (H) fait partie de la scène observée (S), l'unité de commande (40) est configurée pour générer en fonction des signaux de pixel indiquant les valeurs d'intensité de lumière visible et les données d'informations de profondeur un modèle tridimensionnel virtuel (M) de la tête humaine, ces données permettant de restituer la tête humaine sur un affichage avec une direction de visualisation ajustée.

6. Dispositif capteur (10) selon l'une quelconque des revendications 1 à 5, comprenant en outre
   une pluralité de filtres de couleur (80) qui sont agencés de telle sorte qu'au moins la lumière visible atteint les pixels (51) du second sous-ensemble (S2) de pixels (51) et que seule la lumière infrarouge atteint les pixels (51) du premier sous-ensemble de pixels (S1).

7. Dispositif capteur (10) selon la revendication 6, dans lequel

   les pixels (51) sont agencés dans une matrice de pixels (51a) ayant une pluralité de 2 x 2 groupes de pixels qui contiennent chacun un pixel (51) du premier sous-ensemble (S1) de pixels (51) et trois pixels (51) du second sous-ensemble (S2) de pixels (51) ; et
   la pluralité de filtres de couleur (80) sont agencés dans une matrice de filtres de couleur (80a) ayant des filtres rouge (R), vert (G), bleu (B) et infrarouge (IR), où à chaque groupe de pixels de 2 x 2 un filtre rouge (R), un vert (G), un bleu (B) et un infrarouge (IR) sont attribués, le filtre infrarouge (IR) étant attribué au pixel (51) du premier sous-ensemble (S1) de pixels (51).

8. Dispositif capteur (10) selon la revendication 6, dans lequel

les pixels (51) sont agencés en groupes de cinq pixels (51), avec un pixel (51) du premier sous-ensemble (S1) de pixels (51) agencé par rapport à une direction d'incidence de lumière derrière 2 x 2 pixels (51) du second sous-ensemble (S2) de pixels (51) ; et

la pluralité de filtres de couleur (80) sont agencés dans une matrice de filtres de couleur (80a) ayant des filtres rouge (R), vert (G) et bleu (B), agencés de préférence dans un motif de Bayer, ces filtres de couleur (80) étant transparents à l'infrarouge.

9.  Dispositif capteur (10) selon l'une quelconque des revendications 1 à 8, comprenant en outre

une première plaquette (W1) sur laquelle la pluralité de pixels (51) est formée ; et
au moins une plaquette supplémentaire (W2, W3) sur laquelle le système de circuits de détection d'événement (20) et le système de circuits de génération de signaux de pixel (30) sont formés ; dans lequel
le système de circuits de détection d'événement (20) est formé à partir d'une pluralité de premiers blocs de circuit (20a) ;
le système de circuits de génération de signaux de pixel (30) est formé à partir d'une pluralité de seconds blocs de circuit (30a) ; et
l'agencement des premiers blocs de circuit (20a) et des seconds blocs de circuit (30a) sur l'au moins une plaquette supplémentaire (W2, W3) correspond à l'agencement de la pluralité de pixels (51) sur la première plaquette (W1).

10. Dispositif capteur (10) selon la revendication 9, dans lequel

tous les pixels (51) sont formés sur le côté de la première plaquette (W1) faisant face vers la scène (S) ; et
les premiers blocs de circuit (20a) et les seconds blocs de circuit (30a) sont formés sur le même côté d'une seconde plaquette (W2).

11. Dispositif capteur (10) selon la revendication 9, dans lequel

les pixels (51) du second sous-ensemble (S2) de pixels (51) sont formés sur le côté de la première plaquette (W1) faisant face vers la scène (S), alors que les pixels (51) du premier sous-ensemble (S1) de pixels (51) sont formés sur le côté opposé de la première plaquette (W1) ; et
deux plaquettes supplémentaires (W2, W3) sont fournies, où celle adjacente à la première plaquette (W1) porte les seconds blocs de circuit (30a) et l'autre porte les premiers blocs de circuit (20a).

12. Dispositif capteur (10) selon la revendication 9, dans lequel

les pixels (51) du second sous-ensemble (S2) de pixels (51) sont formés sur le côté de la première plaquette (W1) faisant face vers la scène (S), alors que les pixels (51) du premier sous-ensemble (S1) de pixels (51) sont formés sur le côté opposé de la première plaquette (W1) ; et
les premiers blocs de circuit (20a) et les seconds blocs de circuit (30a) sont formés sur deux côtés opposés d'une seconde plaquette (W2), où le côté portant les seconds blocs de circuit (30a) est adjacent à la première plaquette (W1).

13. Dispositif capteur (10) selon la revendication 9, dans lequel

les pixels (51) du second sous-ensemble (S2) de pixels (51) sont formés sur le côté de la première plaquette (W1) faisant face vers la lumière incidente (L), alors que les pixels (51) du premier sous-ensemble (S1) de pixels (51) sont formés sur le côté opposé de la première plaquette (W1) ; et
les premiers blocs de circuit (20a) et les seconds blocs de circuit (30a) sont formés sur le même côté d'une seconde plaquette (W2) de telle sorte que les premiers blocs de circuit (20a) sont encerclés par les seconds blocs de circuit (30a).

14. Procédé permettant de faire fonctionner un dispositif capteur (10) permettant d'observer une scène (S), le procédé comprenant :

la réception de lumière provenant de la scène (S) et la mise en œuvre d'une conversion photoélectrique pour générer un signal électrique avec chacun parmi une pluralité de pixels (51) du dispositif capteur (10) ;
la détection, avec un système de circuits de détection d'événement (20) du dispositif capteur (10), en guise de données d'événement, de changements d'intensité au-dessus d'un seuil prédéterminé de lumière infrarouge reçue par chacun parmi un premier sous-ensemble (S1) des pixels (51) ;

la génération, avec un système de circuits de génération de signaux de pixel (30), de signaux de pixel indiquant des valeurs d'intensité de lumière visible reçue par chaque pixel (51) d'un second sous-ensemble (S2) des pixels (51) ; et

l'extraction d'informations supplémentaires à partir des données d'événement détectées au sein de la lumière infrarouge reçue, ces informations supplémentaires différant des informations d'intensité à deux dimensions sur la scène observée (S), et

le décodage en guise d'informations supplémentaires d'un signal (X) encodé dans la lumière infrarouge reçue.

## Fig. 1

EP 4 500 872 B1

# Fig. 2

SENSOR SECTION 21

35 OUTPUT SECTION → EVENT DATA, PIXEL SIGNAL

EVENT DATA 31

32 DRIVING SECTION

CONTROL SIGNAL, EVENT DATA

PIXEL ARRAY SECTION

REQUEST, RESPONSE

33 ARBITER

PIXEL SIGNAL

AD CONVERSION SECTION 34

EP 4 500 872 B1

# Fig. 3

EP 4 500 872 B1

# Fig. 4

EP 4 500 872 B1

EP 4 500 872 B1

# Fig. 5

52

EVENT DETECTING SECTION

PHOTOCURRENT →

81
CURRENT-VOLTAGE CONVERTING SECTION

82
BUFFER

83
SUBTRACTION SECTION

84
QUANTIZATION SECTION

85
TRANSFER SECTION

→ EVENT DATA

CONTROL SIGNAL

REQUEST, RESPONSE

# Fig. 6

81

CURRENT-VOLTAGE
CONVERTING SECTION

VDD

Vbias ─○| ∼92

91∼

PHOTOVOLTAGE

PHOTOCURRENT

∼93

Fig. 7

Fig. 8

Fig. 9

EVENT DATA

t

FRAME VOLUME

FRAME WIDTH

FRAME INTERVAL

y

x

Fig. 10

Fig. 11

EVENT DETECTING SECTION 52

430 SUBTRACTOR

431 432

VDD

433

434

ROW DRIVING SIGNAL

440 QUANTIZER

VDD

441

Vth

DETECTION SIGNAL

451 memory

Sample signal

452 controller

EP 4 500 872 B1

# Fig. 12

EP 4 500 872 B1

Fig. 13

EP 4 500 872 B1

Fig. 14

510

514

527 READ-OUT REGION SELECTING SECTION

515

521

525 SIGNAL PROCESSING SECTION

530

ROW DIRECTION

COLUMN DIRECTION

528 SIGNAL GENERATING SECTION

522 DRIVING SECTION

Fig. 15

## Fig. 16

P  N  -  P  P  N  P  N  -  N  ← X    Time

## Fig. 17

Fig. 18

Fig. 19

# Fig. 20

# Fig. 21

# Fig. 22

| G | R | G | R |
|---|---|---|---|
| B | G | B | G |
| G | R | G | R |
| B | G | B | G |

L

10

80a

| 80 | 80 | 80 | 80 |
|---|---|---|---|

S2

W1

| S1    96 | S1    96 |
|---|---|
| 95    97 | 95    97 |

30

30a  30a  30a  30a

W2

20

20a  20a

W3

| IR | IR |
|---|---|
| IR | IR |

# Fig. 23

| G | R | G | R |
|---|---|---|---|
| B | G | B | G |
| G | R | G | R |
| B | G | B | G |

L

10

80a

| 80 | 80 | 80 | 80 |
|----|----|----|----|

S2

W1

| S1 | 96 | S1 | 96 |
|----|----|----|----|

| 95 | 97 | 95 | 97 |
|----|----|----|----|

30

| 30a | 30a | 30a | 30a |
|-----|-----|-----|-----|

W2

20

20a    20a

| IR | IR |
|----|----|
| IR | IR |

# Fig. 24

| G | R | G | R |
|---|---|---|---|
| B | G | B | G |
| G | R | G | R |
| B | G | B | G |

L

10

80a

| 80 | 80 | 80 | 80 |
|----|----|----|----|

S2

W1

| S1 | 96 | S1 | 96 |
|----|----|----|----|
| 95 | 97 | 95 | 97 |

30

| IR | IR |
|----|----|
| IR | IR |

W2

20, 30

30a

| 20a | 20a |
|-----|-----|
| 20a | 20a |

30a

# Fig. 25

S101 — Receiving light from a scene and performing photoelectric conversion to generate an electrical signal with each of a plurality of pixels of a sensor device

S102 — Detecting as event data intensity changes above a predetermined threshold of infrared light received by each of a first subset of the pixels

S103 — Generating pixel signals indicating intensity values of visible light received by each pixel of a second subset of the pixels

S104 — Extracting additional information from the event data detected within the received infrared light, which additional information differs from two-dimensional intensity information on the observed scene

# Fig. 26

EP 4 500 872 B1

**EP 4 500 872 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022038645 A1
- WO 2020246186 A1
- US 2022201204 A1
- US 20070070060 A1